# FASCICULE DE BREVET EUROPEEN

(11) **EP 4 173 163 B1**
(45) Date de publication et mention de la délivrance du brevet: **29.05.2024**
(21) Numéro de dépôt: 21740156.1
(22) Date de dépôt: 22.06.2021
(51) Int. Cl.: H04B 7/08, H04B 7/06, H04B 7/04

(54) **DISPOSITIF DE COMMUNICATION SANS FIL MULTI-ANTENNES FULL-DUPLEX, PROCÉDÉ DE CONTRÔLE D'UN TEL DISPOSITIF**
VOLLDUPLEX-, MEHRANTENNEN-DRAHTLOSKOMMUNIKATIONSVORRICHTUNG UND VERFAHREN ZUR STEUERUNG SOLCH EINER VORRICHTUNG
FULL-DUPLEX, MULTI-ANTENNA WIRELESS COMMUNICATION DEVICE AND METHOD FOR CONTROLLING SUCH A DEVICE

(30) Priorité: 25.06.2020 FR 2006651
(43) Date de publication de la demande: 03.05.2023
(73) Titulaire: Orange, 92130 Issy-les-Moulineaux (FR)
(72) Inventeur: RATAJCZAK, Philippe, 92326 CHÂTILLON CEDEX (FR); PHAN HUY, Dinh Thuy, 92326 CHÂTILLON CEDEX (FR); BARTHEL, Dominique, 92326 CHÂTILLON CEDEX (FR)
(74) Mandataire: Cabinet Beau de Loménie
(86) Numéro de dépôt international: PCT/FR2021/051133
(87) Numéro de publication internationale: WO 2021/260317

(56) Documents cités:
- SHICONG LIU ET AL: "Deep Denoising Neural Network Assisted Compressive Channel Estimation for mmWave Intelligent Reflecting Surfaces", ARXIV.ORG, CORNELL UNIVERSITY LIBRARY, 201 OLIN LIBRARY CORNELL UNIVERSITY ITHACA, NY 14853, 3 juin 2020 (2020-06-03), XP081690937,
- TAHA ABDELRAHMAN ET AL: "Deep Learning for Large Intelligent Surfaces in Millimeter Wave and Massive MIMO Systems", 2019 IEEE GLOBAL COMMUNICATIONS CONFERENCE (GLOBECOM), IEEE, 9 décembre 2019 (2019-12-09), pages 1-6, XP033722096, DOI: 10.1109/GLOBECOM38437.2019.9013256
- ASHUTOSH SABHARWAL ET AL: "In-Band Full-Duplex Wireless: Challenges and Opportunities", IEEE JOURNAL ON SELECTED AREAS IN COMMUNICATIONS, vol. 32, no. 9, 1 septembre 2014 (2014-09-01), pages 1637-1652, XP055580962, US ISSN: 0733-8716, DOI: 10.1109/JSAC.2014.2330193

## Description

### Technique antérieure

La présente invention appartient au domaine général des télécommunications, et notamment des communications sans fil mises en oeuvre sur des réseaux de type radio tels que des réseaux mobiles (ex. 3G, 4G, 5G, etc.), Wi-Fi, etc. Elle concerne plus particulièrement un dispositif de communication sans fil comportant un réseau d'antennes élémentaires, ledit dispositif présentant une architecture configurée pour émettre et recevoir des faisceaux de transmission via lesdites antennes élémentaires. Elle concerne également un procédé de contrôle du fonctionnement d'un tel dispositif, ainsi qu'un procédé de communication mis en oeuvre par un système de communication sans fil comportant un tel dispositif.

L'invention trouve une application particulièrement avantageuse, bien que nullement limitative, dans le cas d'un dispositif de communication sans fil de type MIMO (acronyme de l'expression anglo-saxonne « Multiple Input Multiple Output ») utilisant plusieurs antennes en émission et en réception, et notamment dans le cas d'un dispositif de communication sans fil de type MIMO massif s'appuyant sur un grand nombre d'antennes (typiquement de 16 à 128 antennes, ce nombre étant amené à augmenter dans le futur).

Afin de s'adapter à la croissance continue et toujours plus rapide du trafic de données émises par les systèmes de communications sans fil, différentes technologies sont aujourd'hui mises en oeuvre, et font encore l'objet de perfectionnements en vue d'une exploitation optimale dans les années à venir.

Parmi ces technologies, et plus particulièrement dans le contexte des systèmes de communications sans fil de type MIMO, il est connu de configurer un dispositif de communication sans fil, comme par exemple une station de base ou un téléphone mobile, dans le but d'émettre et/ou de recevoir simultanément plusieurs flux de données via un réseau d'antennes (i.e. un ensemble d'antennes élémentaires) équipant ledit dispositif de communication sans fil. Avantageusement, ces flux de données sont véhiculés par des faisceaux de transmission directifs (encore appelée « beamforming » dans la littérature anglo-saxonne) formés à cet effet. L'utilisation de tels faisceaux permet ainsi au dispositif de communication sans fil de délivrer ou de recevoir des données avec une haute efficacité spectrale ainsi qu'avec un haut débit.

Ces performances peuvent encore être améliorées via l'utilisation de surfaces dites « intelligentes » (« Intelligent Surfaces » dans la littérature anglo-saxonne), souvent de grande taille, comme cela a été proposé récemment.

Dans son principe général, une telle surface intelligente est essentiellement composée d'antennes connectées à des déphaseurs passifs qui sont contrôlés pour permettre auxdites antennes de réfléchir des signaux incidents (ex : des faisceaux de transmission) dans une direction privilégiée. En conséquence, lorsqu'une telle surface intelligente est positionnée dans l'environnement de deux dispositifs de communication sans fil, l'un jouant le rôle d'émetteur et l'autre jouant le rôle de récepteur, elle permet d'augmenter le débit entre ces derniers en créant un canal de propagation propice à une meilleure réflexion vers le dispositif récepteur de signaux incidents provenant du dispositif émetteur. Des exemples de mises en oeuvre d'une telle surface intelligente sont par exemple décrits dans le document : « Deep Learning for Large Intelligent Surfaces in Millimeter Wave and Massive MIMO Systems », A. Taha, M. Alrabeiah, A. Alkhateeb, Proc. IEEE Globecom 2019, 9-13 Dec. 2019, Hawaii, USA.

Il convient par ailleurs de noter que l'utilisation d'une surface intelligente se révèle particulièrement avantageuse lorsqu'un obstacle empêche, ou du moins complique, l'établissement d'une communication entre un dispositif émetteur et un dispositif récepteur. A titre illustratif, il peut s'agir d'un mur positionné entre ces dispositifs, une surface intelligente permettant dès lors à ces derniers de communiquer entre eux en « contournant » ce mur.

Cela étant, la mise en oeuvre d'une surface intelligente reste encore à ce jour problématique, essentiellement pour des raisons de complexité et de coût. En effet, le contrôle efficace d'un nombre important de déphaseurs passifs se révèle être une tâche ardue, au moins en ce qui concerne l'électronique à déployer ainsi que les aspects algorithmiques et de traitement de signal à implémenter. Par ailleurs, le fait d'intégrer un élément (i.e. la surface intelligente) en sus des éléments formant initialement un système de communication sans fil (i.e. dispositifs émetteurs et dispositifs récepteurs) exige des dépenses importantes, contribuant alors à faire de l'utilisation d'une surface intelligente une solution de communication onéreuse.

Le document « Deep Denoising Neural Network Assisted Compressive Channel Estimation for mmWave Intelligent Reflecting Surfaces », SHICONG LIU ET AL, ARXIV.ORG, CORNELL UNIVERSITY LIBRARY, 201 OLIN LIBRARY CORNELL UNIVERSITY ITHACA, NY 14853, 3 juin 2020, décrit une méthode d'estimation de canal pour un système de communication MIMO comportant une surface intelligente.

### Exposé de l'invention

La présente invention a pour objectif de remédier à tout ou partie des inconvénients de l'art antérieur, notamment ceux exposés ci-avant, en proposant une solution qui permette d'améliorer les performances d'un système de communication sans fil de manière plus simple et moins coûteuse que les solutions de l'art antérieur mettant en oeuvre une surface intelligente.

A cet effet, et selon un premier aspect, l'invention concerne un dispositif de communication sans fil présentant une architecture configurée pour émettre et recevoir des faisceaux de transmission en mode full-duplex via un réseau d'antennes élémentaires et comportant des déphaseurs passifs répartis suivant un premier ensemble et un deuxième ensemble, lesdits déphaseurs comportant chacun un premier port et un deuxième port, les déphaseurs du premier ensemble/deuxième ensemble étant respectivement connectés, via leurs premiers ports, à des amplificateurs de puissance /faible bruit de chaînes d'émission/de réception reliées auxdites antennes élémentaires, chaque chaîne d'émission/de réception étant associée à une chaîne de réception/d'émission de sorte à former une paire de chaînes, un circuit de jonction étant agencé entre les chaînes de chaque paire de chaînes. Ledit dispositif comporte en outre au moins un module de contrôle configuré pour commander des moyens de commutation dudit dispositif et pour activer/désactiver des moyens analogiques et numériques d'annulation d'interférences dudit dispositif ainsi que tout ou partie des chaînes d'émission et de réception, de sorte que le dispositif est apte à alterner entre au moins deux modes distincts :
- un premier mode dans lequel les moyens d'annulation ainsi que les chaînes d'émission et de réception sont activés, les déphaseurs étant connectés à leurs chaînes respectives via leur deuxième port,
- un deuxième mode dans lequel les chaînes, hormis leurs amplificateurs respectifs, sont désactivées, le deuxième port d'un déphaseur intégré à une chaîne d'une paire de chaînes étant connecté, via le circuit de jonction associé à ladite paire, au deuxième port du déphaseur intégré à l'autre chaîne de ladite paire.

Ainsi, il est proposé un dispositif de communication sans fil présentant d'une part une architecture full-duplex, et configuré d'autre part de manière logicielle et matérielle pour réfléchir un ou plusieurs faisceaux de transmission dans une direction qui peut être contrôlée grâce aux déphaseurs passifs.

Les avantages proposés par une telle architecture full-duplex résident notamment dans le fait que le dispositif de communication sans fil selon l'invention est apte à émettre et recevoir simultanément des signaux dans une bande de fréquence qui lui est associée. De telles dispositions permettent avantageusement d'éviter d'avoir à solliciter de multiples bandes de fréquences, qui sont des ressources rares, pour d'une part émettre et d'autre part recevoir des signaux, améliorant ainsi l'efficacité spectrale dudit dispositif.

D'une manière générale, l'homme du métier peut se référer au document suivant pour plus de détails concernant l'implémentation d'une architecture full-duplex : « In-Band Full-Duplex Wireless : Challenges and Opportunities », A. Sabharwal, P. Schniter, D. Guo, D. W. Bliss, S. Rangarajan, R. Wichman, IEEE Journal of Selected Areas in Communications, vol. 32, no. 9, pp. 1637-1652, Sept. 2014.

Les déphaseurs passifs intégrés à l'architecture full-duplex du dispositif de communication selon l'invention permettent classiquement, selon la manière dont ils sont configurés, de contrôler la direction dans laquelle sont préférentiellement orientés les faisceaux de transmission pouvant être émis ou reçus par le réseau d'antennes élémentaires. L'invention ne se limite néanmoins pas à une telle utilisation desdits déphaseurs passifs.

En effet, chaque déphaseur passif est également exploité pour permettre de relier entre elles, suivant ledit deuxième mode de fonctionnement du dispositif de communication sans fil, des chaînes d'émission et de réception par paires. De cette manière, dans ce deuxième mode de fonctionnement, l'énergie transportée par un signal et reçue au niveau d'une antenne élémentaire suit un chemin formant une boucle, du fait de la liaison entre chaînes et grâce au circuit de jonction, de sorte à pouvoir être redirigée en direction de la même antenne élémentaire (ou bien éventuellement d'une autre antenne élémentaire) et ainsi être réfléchie.

Par conséquent, lorsque les déphaseurs passifs sont configurés de manière appropriée, le dispositif de communication selon l'invention se comporte comme une surface intelligente, puisqu'un signal reçu par ce dernier peut être réfléchi dans une direction choisie. De telles dispositions permettent au dispositif de communication selon l'invention d'améliorer les communications éventuelles entre d'autres dispositifs de communication, comme le proposent les surfaces intelligentes (augmentation du débit, contournement d'un obstacle).

Les modifications à envisager pour réaliser un dispositif de communication selon l'invention à partir d'un dispositif traditionnel présentant une architecture full-duplex sont en outre peu onéreuses. En effet, la mise en oeuvre de composants tels que des moyens de commutation appropriés peut être réalisée à moindre coût, ces composants étant très facilement accessibles.

L'invention est en outre particulièrement avantageuse dans la mesure où le dispositif de communication selon l'invention peut prendre la forme d'un équipement déjà présent dans l'environnement d'un réseau de communication. A titre d'exemple, il peut s'agir d'un terminal mobile, d'une station de base, etc. Autrement dit, en configurant suivant les dispositions de l'invention un dispositif de communication traditionnel présentant une architecture full-duplex, il n'est pas nécessaire d'utiliser, comme cela est fait dans l'état de l'art, de surfaces intelligentes coûteuses et complexes à mettre en oeuvre.

L'invention permet donc de tirer avantageusement parti des avantages fournis par une architecture full-duplex ainsi que par une surface intelligente, en faisant l'économie de l'implémentation effective d'une telle surface dans un réseau de communication. De cette manière, l'invention offre la possibilité d'améliorer les communications dans un réseau de communication, de façon simple et peu onéreuse.

Dans des modes particuliers de réalisation, le dispositif de communication sans fil peut comporter en outre l'une ou plusieurs des caractéristiques suivantes, prises isolément ou selon toutes les combinaisons techniquement possibles.

Dans des modes particuliers de réalisation, les moyens de commutation comportent, pour chaque déphaseur passif, un inverseur configurable suivant deux configurations :
- une première configuration dans laquelle ledit inverseur connecte le deuxième port dudit déphaseur à la chaîne à laquelle est intégré ledit déphaseur,
- une deuxième configuration dans laquelle ledit inverseur connecte le deuxième port dudit déphaseur au circuit de jonction associé à la paire de chaînes comprenant la chaîne à laquelle est intégré ledit déphaseur.

De telles dispositions font référence à un premier mode de réalisation des moyens de commutation, et sont particulièrement simples et peu onéreuses à implémenter.

Il convient de noter que l'alternance entre les modes de fonctionnement du dispositif de communication implique que, dans le premier mode de réalisation des moyens de commutation, les inverseurs respectivement associés aux déphaseurs intégrés aux chaînes d'émission (respectivement aux chaînes de réception) sont pilotés de manière conjointe de sorte à être tous dans une même configuration en même temps lorsque le dispositif de communication se trouve dans un mode de fonctionnement donné. On comprend dès lors que les inverseurs respectivement associés aux déphaseurs intégrés aux chaînes d'émission (respectivement aux chaînes de réception) forment un inverseur multipôles.

Dans des modes particuliers de réalisation, les moyens de commutation comportent, pour chaque déphaseur passif, un premier inverseur et un deuxième inverseur reliés à des lignes de transmission respectives montées en parallèle et se rejoignant au niveau d'un point de connexion auquel est connecté le deuxième port dudit déphaseur, chaque inverseur étant configurable suivant deux configurations, une première configuration dans laquelle :
- le premier inverseur connecte ledit point de connexion à la chaîne à laquelle est intégré ledit déphaseur,
- le deuxième inverseur connecte ledit point de connexion à un premier circuit d'adaptation d'impédance,
ainsi qu'une deuxième configuration dans laquelle :
- le premier inverseur connecte ledit point de connexion à un deuxième circuit d'adaptation d'impédance distinct dudit premier circuit d'adaptation d'impédance,
- le deuxième inverseur connecte ledit point de connexion au circuit de jonction associé à la paire de chaînes comprenant la chaîne à laquelle est intégré ledit déphaseur.
Par ailleurs, ledit premier circuit d'impédance (respectivement le deuxième circuit d'impédance) est configuré pour créer un circuit ouvert au niveau du point de connexion lorsque le deuxième inverseur (respectivement le premier inverseur) est configuré dans sa première configuration (respectivement dans sa deuxième configuration).

De telles dispositions font référence à un deuxième mode de réalisation des moyens de commutation, en alternative au premier mode de réalisation mentionné ci-avant pour les moyens de commutation.

En créant ainsi un « véritable » circuit ouvert au niveau du point de connexion en fonction des configurations des inverseurs, lesdits circuits d'impédance permettent de compenser les effets d'un stub ouvert.

Par « stub ouvert » (le terme « stub » provenant de la littérature anglo-saxonne), on fait classiquement référence ici à une ligne terminée par un circuit ouvert placée en parallèle avec une autre ligne.

L'existence d'un tel stub ouvert, dans l'hypothèse où les circuits d'adaptation d'impédance ne sont pas utilisés, implique un risque d'apparition de court-circuit au niveau du point de connexion. Plus particulièrement, ce risque se matérialise lorsque la longueur de la ligne de transmission associée audit stub ouvert est un multiple rationnel de la longueur d'onde associés aux signaux incidents aux antennes, le multiple rationnel en question étant de la forme 1/4 + n/2 où n est un entier naturel (n supérieur ou égal à 0).

Les circuits d'adaptation d'impédance permettent donc, lorsqu'ils sont configurés de manière appropriée, d'éviter les désagréments liés à un stub ouvert. Cela permet d'optimiser le transfert d'énergie électromagnétique le long des lignes de transmission, et donc en particulier entre les chaînes des paires lorsque le dispositif de communication est configuré dans ledit deuxième mode de fonctionnement.

De manière similaire à ce qui a été mentionné ci-avant pour le premier mode de réalisation des moyens de commutation, il convient de noter que l'alternance entre les modes de fonctionnement du dispositif de communication implique que, dans ledit deuxième mode de réalisation des moyens de commutation, les premiers/deuxièmes inverseurs respectivement associés aux déphaseurs intégrés aux chaînes de réception (respectivement aux chaînes de réception) sont pilotés de manière conjointe de sorte à être tous dans une même configuration en même temps lorsque le dispositif de communication se trouve dans un mode de fonctionnement donné. On comprend dès lors que les premiers/deuxième inverseurs respectivement associés aux déphaseurs intégrés aux chaînes de réception (respectivement aux chaînes de réception) forment un inverseur multipôles. Il y a donc un premier inverseur multipôles et un deuxième inverseur multipôles pour les déphaseurs intégrés aux chaînes d'émission (respectivement aux chaînes de réception).

Dans des modes particuliers de réalisation, ledit au moins un module de contrôle est configuré pour mettre en oeuvre l'alternance entre lesdits au moins deux modes distincts suivant un schéma temporel déterminé.

Dans des modes particuliers de réalisation, ledit schéma temporel déterminé est conforme à un protocole de télécommunication.

Dans des modes particuliers de réalisation, ledit au moins un module de contrôle est configuré pour mettre en oeuvre l'alternance entre lesdits au moins deux modes distincts suivant un schéma temporel dynamique.

Dans des modes particuliers de réalisation, l'amplificateur de puissance et l'amplificateur faible bruit appartenant à chaque paire de chaînes sont configurés de sorte que le produit de leurs gains respectifs est inférieur ou égal à 1 lorsque le dispositif est configuré selon ledit deuxième mode (i.e. ledit deuxième mode de fonctionnement).

De telles dispositions permettent avantageusement d'éviter certains effets indésirables pouvant être rencontrés lors de la transmission de signaux RF (acronyme de « Radio Fréquence »), comme par exemple typiquement l'effet Larsen.

Dans des modes particuliers de réalisation, les moyens analogique d'annulation sont activés dans ledit deuxième mode (i.e. ledit deuxième mode de fonctionnement).

Dans des modes particuliers de réalisation, ledit au moins un module de contrôle est configuré pour commander les moyens de commutation et pour activer/désactiver les moyens analogiques et numériques d'annulation d'interférences ainsi que tout ou partie des chaînes d'émission et de réception, de sorte que le dispositif est apte à alterner entre ledit premier mode, ledit deuxième mode et au moins un mode parmi :
- un troisième mode dans lequel les chaînes d'émission /de réception sont activées/désactivées, les déphaseurs du premier ensemble étant connectés à leurs chaînes d'émission respectives via leur deuxième ports,
- un quatrième mode dans lequel les chaînes d'émission/de réception sont désactivées/activées, les déphaseurs du deuxième ensemble étant connectés à leurs chaînes de réception respectives via leur deuxième ports.

De telles dispositions permettent au dispositif de communication de réaliser des communications de manière traditionnelle (i.e. émission et/ou réception de faisceaux de transmission dans le cadre du troisième mode et/ou du quatrième de fonctionnement).

Selon un deuxième aspect, l'invention concerne un système de communication sans fil comportant :
- un premier dispositif de communication sans fil configuré pour émettre au moins un faisceau de transmission,
- un deuxième dispositif de communication sans fil selon l'invention, apte à réfléchir au moins un desdits faisceaux de transmission dans une direction déterminée lorsqu'il est configuré selon ledit deuxième mode,
- un troisième dispositif de communication sans fil configuré pour recevoir ledit au moins un faisceau de transmission réfléchi par ledit deuxième dispositif de communication

Selon un troisième aspect, l'invention concerne un procédé de contrôle du fonctionnement d'un dispositif de communication sans fil selon l'invention, ledit procédé de contrôle étant mis en œuvre par ledit au moins un module de contrôle dudit dispositif de communication sans fil, et dans lequel les moyens de commutation sont commandés et les moyens analogiques et numériques d'annulation d'interférences dudit dispositif ainsi que tout ou partie des chaînes d'émission et de réception sont activés ou désactivés de sorte que ledit dispositif de communication sans fil alterne entre lesdits au moins deux modes distincts.

Le procédé de contrôle selon l'invention hérite donc des avantages apportés par le dispositif de communication selon l'invention, ledit au moins un module de contrôle permettant donc de configurer ce dispositif dans le mode de fonctionnement qui lui permet de réfléchir un ou plusieurs faisceaux de transmission dans une direction donnée grâce aux déphaseurs passifs.

Selon un quatrième aspect, l'invention concerne un programme d'ordinateur comportant des instructions pour la mise en oeuvre d'un procédé de contrôle selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un cinquième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un sixième aspect, l'invention concerne un procédé de communication mis en oeuvre par un système de communication sans fil selon l'invention, dans lequel au moins un faisceau de transmission émis par le premier dispositif de communication est réfléchi par le deuxième dispositif de communication lorsque ledit deuxième dispositif de communication est dans ledit deuxième mode (i.e. ledit deuxième mode de fonctionnement) et reçu par le troisième dispositif de communication.

Dans des modes particuliers de mise en oeuvre, le deuxième dispositif de communication sans fil comporte des déphaseurs passifs répartis suivant un premier ensemble et un deuxième ensemble, les déphaseurs du premier ensemble/deuxième ensemble étant connectés à des chaînes d'émission/de réception respectives. En outre, ledit procédé de communication comporte des étapes de :
- estimation d'un premier canal de propagation entre les premier et deuxième dispositifs de communication,
- détermination, par le deuxième dispositif de communication et en fonction de l'estimation du premier canal de propagation, d'une première loi de phase apte à configurer les déphaseurs passifs dudit deuxième ensemble de sorte à privilégier la réception dudit au moins un faisceau de transmission en provenance du premier dispositif de communication,
- estimation d'un deuxième canal de propagation entre les deuxième et troisième dispositifs de communication,
- détermination, par le deuxième dispositif de communication et en fonction de l'estimation du deuxième canal de propagation, d'une deuxième loi de phase apte à configurer les déphaseurs passifs dudit premier ensemble de sorte à privilégier une émission de faisceau de transmission en direction dudit troisième dispositif de communication,
- réflexion, par le deuxième dispositif de communication configuré dans ledit deuxième mode (i.e. ledit deuxième mode de fonctionnement), dudit au moins un faisceau de transmission vers le troisième dispositif de communication, lesdites première et deuxième lois de phase étant appliquées simultanément par respectivement les déphaseurs du deuxième ensemble et les déphaseurs du premier ensemble.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'un système de communication selon l'invention ;
[Fig. 2] la figure 2 représente schématiquement un exemple d'architecture matérielle d'un dispositif de communication sans fil selon l'invention appartenant au système de communication de la figure 1 ;
[Fig. 3] la figure 3 est une représentation schématique alternative de l'architecture matérielle du dispositif de communication de la figure 2 ;
[Fig. 4] la figure 4 représente schématiquement un premier mode particulier de réalisation de moyens de commutation équipant le dispositif de communication de la figure 2, selon une vue partielle agrandie dudit dispositif ;
[Fig. 5] la figure 5 représente schématiquement un deuxième mode particulier de réalisation de moyens de commutation équipant le dispositif de communication de la figure 2, selon une vue partielle agrandie dudit dispositif ;
[Fig. 6] la figure 6 représente, sous forme d'ordinogramme, un exemple particulier de mise en oeuvre d'un procédé de contrôle selon l'invention ;
[Fig. 7] la figure 7 représente, sous forme d'ordinogramme, un exemple particulier de mise en oeuvre d'un procédé de communication selon l'invention.

### Description des modes de réalisation

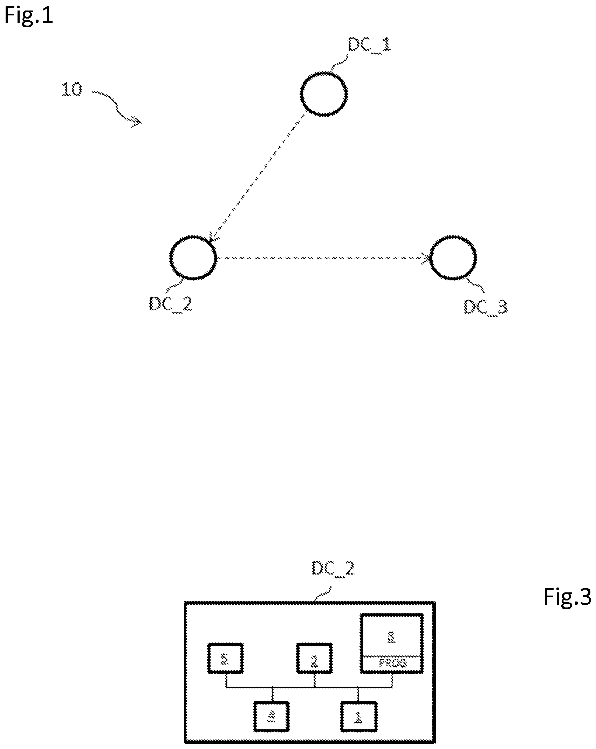

La figure 1 représente schématiquement, dans son environnement, un mode particulier de réalisation d'un système 10 de communication sans fil selon l'invention.

Le système 10 de communications sans fil est un système multi-antennes ou MIMO. Tel qu'illustré par la figure 1, ce système 10 comporte un premier dispositif de communication sans fil DC_1, un deuxième dispositif de communication DC_2 selon l'invention ainsi qu'un troisième dispositif de communication DC_3.

Dans le présent mode de réalisation, et à des fins de simplification de la description, il est considéré que le système 10 de communication comporte uniquement lesdits dispositifs de communication DC_1, DC_2 et DC_3. Il convient cependant de noter qu'aucune limitation n'est attachée au nombre de dispositifs de communication (dont notamment de dispositifs de communication selon l'invention) pouvant être considérés dans le cadre de la présente invention. Les développements qui suivent sont en effet généralisables sans difficulté par l'homme du métier au cas où plus de trois dispositifs de communication sans fil (dont une pluralité de dispositifs de communication selon l'invention) sont considérés.

Le deuxième dispositif de communication sans fil DC_2 comporte une pluralité d'antennes élémentaires A_1, ..., A_N, N étant un nombre entier strictement supérieur à 1 (non représentées sur la figure 1) organisées sous la forme d'un réseau d'antennes et configurées pour émettre et recevoir des faisceaux, ces derniers servant de support à la transmission simultanée de plusieurs flux de données pour servir une ou plusieurs portions déterminées de l'espace. De tels faisceaux sont dits « faisceaux de transmission » dans la suite de la description. Il convient de noter que le nombre d'antennes équipant le dispositif de communication DC_2 ne constitue pas un facteur limitant de l'invention, dès lors que ce nombre est supérieur à 2.

Chaque dispositif de communication DC_1, DC_3 est quant à lui équipé d'au moins une antenne. Aucune limitation n'est attachée au nombre d'antennes équipant chacun desdits dispositifs de communication DC_1, DC_3.

De cette manière, le dispositif de communication DC_2 est apte à communiquer avec les dispositifs de communication DC_1 et DC_3. Bien entendu, rien n'exclut d'envisager que les dispositifs de communication DC_1 et DC_3 puissent communiquer directement entre eux.

Les dispositifs de communication DC_1, DC_2 et DC_3 appartiennent à un réseau de communications sans fil (non représenté sur la figure 1) et sont aptes à communiquer entre eux dans une bande fréquentielle associée à ce réseau de communications sans fil. Pour la suite de la description, on considère de manière non limitative que ledit réseau de télécommunications est un réseau mobile de type 5G.

Il convient toutefois de préciser que l'invention reste applicable à d'autres types de réseau de télécommunications, comme par exemple un réseau mobile 4G, 3G, Wi-Fi, etc. D'une manière générale, aucune limitation n'est attachée à la nature du réseau de télécommunications pouvant être considéré dans le cadre de la présente invention.

Il convient également de noter que l'invention est applicable indépendamment de la nature desdits dispositifs de communication DC_1, DC_2 et DC_3, dès lors que ces derniers sont en mesure de réaliser des communications sans fil. Ainsi, rien n'exclut de considérer qu'au moins un des dispositifs de communication est un terminal mobile, comme par exemple un ordinateur portable, un assistant personnel, un objet connecté, un téléphone mobile de type « smartphone », etc. et qu'au moins un autre desdits dispositifs de communication est une station de base. Rien n'exclut non plus de considérer que les dispositifs de communication DC_1, DC_2 et DC_3 sont tous trois des terminaux mobiles ou bien tous trois des stations de base.

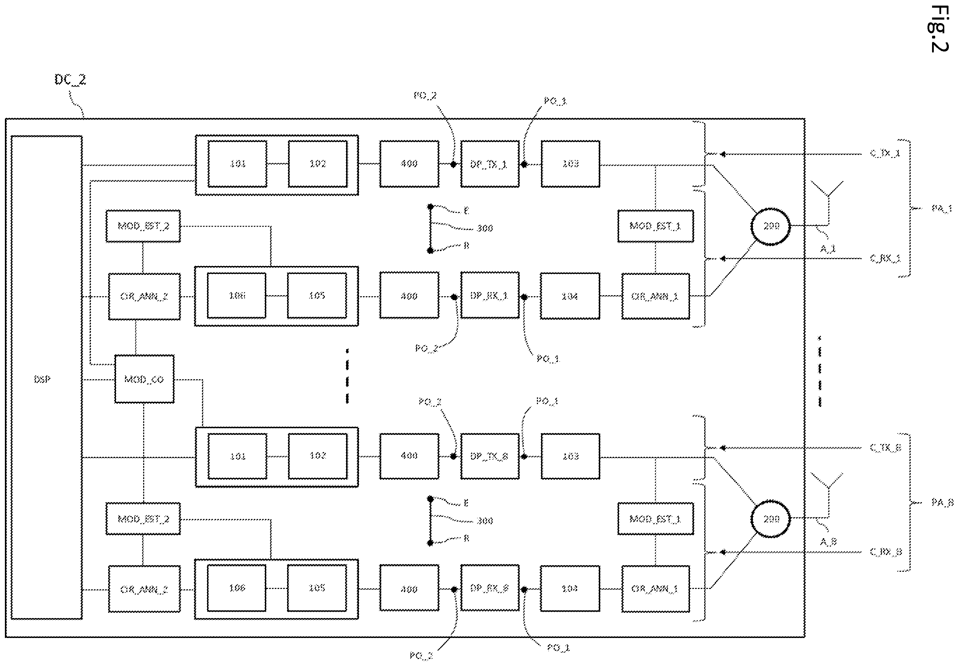

La figure 2 représente schématiquement un exemple d'architecture matérielle du deuxième dispositif sans fil DC_2 selon l'invention appartenant au système 10 de communication de la figure 1.

Il importe de noter que la figure 2 illustre ici de manière schématique une structure générale du dispositif transmetteur DC_2 selon l'invention. Des modes de réalisation spécifiques de cette architecture sont décrits plus en détails ultérieurement.

Conformément à l'invention, le dispositif de communication DC_2 présente une architecture configurée pour émettre et recevoir des faisceaux de transmission en mode full-duplex via lesdites antennes élémentaires A_1, ..., A_N.

Les avantages proposés par une telle architecture full-duplex résident notamment dans le fait que le deuxième dispositif DC_2 est apte à émettre et recevoir simultanément des signaux sous forme de faisceaux de transmission dans la bande de fréquence qui lui est associée. De telles dispositions permettent avantageusement d'éviter d'avoir à solliciter de multiples bandes de fréquences, qui sont des ressources rares, pour d'une part émettre et d'autre part recevoir des signaux, améliorant ainsi l'efficacité spectrale dudit deuxième dispositif DC_2.

Dans l'exemple de la figure 2, le nombre N d'antennes élémentaires est considéré égal à 8 (à des fins de simplification de la figure 2, seules les antennes A_1 et A_8 sont représentées en détails). En outre, dans cet exemple de réalisation, chaque antenne A_i est configurée non seulement pour émettre des faisceaux de transmission mais également pour en recevoir. Autrement dit, chaque antenne A_i est à la fois émettrice et réceptrice.

Le deuxième dispositif DC_2 comporte également, du fait de ladite architecture full-duplex, une pluralité de chaînes d'émission RF (acronyme de « Radio Fréquence ») ainsi qu'une pluralité de chaînes de réception RF.

Dans le présent exemple de réalisation, et tel qu'illustré par la figure 2, chaque antenne A_i (i est un indice entier compris entre 1 et N) est reliée au moyen d'un circulateur 200 à une paire PA_i de chaînes RF comportant une chaîne d'émission C_TX_i ainsi qu'une chaîne de réception G_RX_i. Autrement dit, chaque chaîne d'émission C_TX_i/de réception C_RX_i est associée à une chaîne de réception C_RX_i/d'émission C_TX_i de sorte à former une paire PA_i de chaînes pour ladite antenne A_i. Ainsi, il y a autant de paires PA_i de chaînes que d'antennes A_i.

De plus, chaque chaîne d'émission C_TX_i comporte un convertisseur numérique-analogique 101, un modulateur 102 ainsi qu'un amplificateur de puissance 103 relié à l'antenne élémentaire A_i à laquelle est associée ladite chaîne C_TX_i. Chaque chaîne de réception C_RX_i, quant à elle, comporte un amplificateur faible bruit 104 relié à l'antenne élémentaire A_i à laquelle est associée ladite chaîne C_RX_i, ainsi qu'un démodulateur 105 et un convertisseur analogique-numérique 106.

Bien entendu, une chaîne d'émission C_TX_i (respectivement une chaîne de réception C_RX_i), peut comporter encore d'autres équipements électroniques (filtres, etc.), cet aspect n'étant pas décrit plus avant ici car sortant du cadre de l'invention.

Le deuxième dispositif DC_2 comporte également une unité électronique de traitement de signal, dite unité « DSP » (acronyme de l'expression anglo-saxonne « Digital Signal Processing »). Ladite unité DSP est configurée pour générer des signaux en bande de base destinés à être acheminés vers les antennes A_i via lesdites chaînes d'émission C_TX_i, ainsi qu'à traiter des signaux reçus par les antennes A_i et acheminés à ladite unité DSP via lesdites chaînes de réception G_RX_i.

A cet effet, l'unité DSP comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre les traitements de signaux susmentionnés.

Alternativement ou en complément, l'unité DSP comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre lesdits traitements de signaux.

En d'autres termes, l'unité DSP comporte un ensemble de moyens configurés de façon logicielle (programme d'ordinateur spécifique) et / ou matérielle (FPGA, PLD, ASIC, etc.) pour mettre en oeuvre lesdits traitements de signaux.

Le deuxième dispositif DC_2 comporte en outre des déphaseurs passifs DP_TX_1, ..., DP - TX_N ainsi que des déphaseurs passifs DP_RX_1, ..., DP_RX_N. Lesdits déphaseurs passifs sont de conception connue en soi et sont configurés pour affecter des poids à des signaux analogiques, de manière ajustée et adaptative en vue de l'émission ou de la réception de faisceaux de transmission par le réseau des antennes élémentaires A_1, ..., A_N, pour s'inscrire par exemple dans le cadre d'une stratégie de communication donnée. A titre illustratif, une telle stratégie peut consister à maximiser la puissance du signal reçu au niveau d'un ou plusieurs terminaux récepteurs, comme par exemple le dispositif de communication DC_3.

Chaque déphaseur passif est intégré à une chaîne d'émission ou bien à une chaîne de réception, étant entendu qu'à chaque chaîne est intégré un seul déphaseur passif.

Plus particulièrement, les déphaseurs passifs sont répartis suivant deux ensembles distincts, à savoir un premier ensemble E_1 et un deuxième ensemble E_2. Ledit premier ensemble E_1 comprend les déphaseurs DP_TX_1, ..., DP_TX_N respectivement intégrés aux chaînes d'émission C_TX_1, ..., C_TX_N. Ledit deuxième ensemble E_2 comprend, quant à lui, les déphaseurs DP_RX_1, ..., DP_RX_N respectivement intégrés aux chaînes de réception C_RX_1, ..., C_RX_N. Ainsi, pour un indice i fixé, une paire de chaînes PA_i est associée à deux déphaseurs, à savoir les déphaseurs DP_TX_i et DP_RX_i respectivement intégrés aux chaînes C_TX_i et C_RX_i de ladite paire PA_i.

Chaque déphaseur passif DP TX_i sépare la chaîne d'émission C_TX_i à laquelle il est intégré en une partie dite « interne » comprenant ledit convertisseur numérique-analogique 101 et ledit modulateur 102, ainsi qu'une partie dite « externe » comprenant ledit amplificateur de puissance 103. De manière analogue, chaque chaîne de réception C_RX_i comporte une partie dite « externe » comprenant ledit amplificateur faible bruit 104 ainsi qu'une partie dite « interne » comprenant ledit démodulateur 105 et ledit convertisseur analogique-numérique 106.

De manière conventionnelle, chaque déphaseur passif DP_TX_i/DP_RX_i comporte un premier port PO_1 et un deuxième port PO_2. En outre, et conformément à l'invention, chaque déphaseur DP TX_i du premier ensemble E_1 (respectivement chaque déphaseur DP_RX_i du deuxième ensemble E_2) est connecté, via son premier port PO_1, à l'amplificateur de puissance 103 (respectivement à l'amplificateur faible bruit 104) de la chaîne d'émission C_TX_i (respectivement de la chaîne de réception C_RX_i) à laquelle il est intégré. Le deuxième port PO_2 de chaque déphaseur DP_TX_i du premier ensemble E_1 (respectivement de chaque déphaseur DP_RX_i du deuxième ensemble E_2), quant à lui, est destiné à être connecté, via des moyens de commutation conformes à l'invention et décrits ultérieurement, à la partie interne de la chaîne à laquelle est intégré ledit déphaseur DP TX_i (respectivement ledit déphaseur DP_RX_i) ou bien à un circuit de jonction conforme à l'invention et équipant le deuxième dispositif DC_2, ce circuit de jonction étant également décrit plus en détail ultérieurement.

Le deuxième dispositif DC_2 comporte également, de manière classique du fait de son architecture full-duplex, des moyens analogiques et numériques d'annulation d'interférences. Lesdits moyens analogiques et numériques comportent, pour chaque paire PA_i de chaînes, un premier module d'estimation MOD_EST_1 et un deuxième module d'estimation MOD_EST 2.

Ledit premier module d'estimation MOD_EST_1 est un module analogique configuré pour déterminer, notamment au cours d'une trame temporelle pendant laquelle le deuxième dispositif DC_2 communique en mode full-duplex (émission et réception simultanée), une estimation d'une contribution C_1 à un signal S_RX reçu (sous forme de faisceau de transmission) par ledit deuxième dispositif DC_2. Ladite contribution C_1 résulte d'une propagation directe vers le deuxième dispositif DC_2 d'un signal S_TX émis (sous forme de faisceau de transmission et simultanément à la réception dudit signal S_RX) par ce dernier.

Par « propagation directe du signal S_TX », on fait référence ici à une propagation au cours de laquelle aucun obstacle susceptible de modifier la trajectoire du signal S_TX n'est rencontré. Autrement dit, le signal S_TX émis par le deuxième dispositif DC_2 contribue au signal global S_RX reçu par ce dernier sans avoir été réfléchi auparavant. En conséquence, au niveau de l'antenne A_i associée à la paire PA_i, le signal S_TX peut interférer notamment avec un ou plusieurs signaux émis par d'autres dispositifs, comme par exemple le dispositif DC_3, en vue de communiquer avec le dispositif DC_2. Aussi, la contribution C_1 associée à cette propagation directe du signal S_TX est encore appelée « auto-interférence directe » dans l'état de l'art.

Ledit deuxième module d'estimation MOD_EST_2 est quant à lui un module numérique (i.e. logiciel) configuré pour déterminer, notamment au cours de ladite trame temporelle pendant laquelle le deuxième dispositif DC_2 communique en mode full-duplex, une estimation d'une somme comprenant :
- un premier terme correspondant à une différence entre C_1 et l'estimation de C_1,
- un deuxième terme correspondant à une estimation d'une contribution C_2 résultant d'une propagation indirecte, suivant une ou plusieurs réflexions, du signal S_TX vers le deuxième dispositif DC_2, la ou lesdites réflexions étant mises en oeuvre par un ou plusieurs éléments.

Par « propagation indirecte du signal S_TX », on fait référence ici à une propagation au cours de laquelle lesdits éléments forment des obstacles susceptibles de modifier la trajectoire du signal S_TX de sorte que ce dernier est réfléchi vers l'antenne de réception A_i associée à ladite paire PA_i. De tels éléments sont classiquement positionnés dans l'environnement du système 10 de communication. Par exemple, il peut s'agir d'une surface vitrée, d'un mur, etc. En conséquence, au niveau de l'antenne A_i associée à la paire PA_i, le ou les réflexions du signal S_TX peuvent interférer notamment avec un ou plusieurs signaux émis par d'autres dispositifs, comme par exemple le dispositif DC_3, en vue de communiquer avec le dispositif DC_2. Aussi, la contribution C_2 associée à cette propagation indirecte du signal S_TX est encore appelée « auto-interférence réfléchie » dans l'état de l'art.

Lesdits moyens analogiques et numériques comportent également, pour chaque paire PA_i de chaînes, un circuit analogique GIR ANN_1, de conception connu en soi, agencé entre l'antenne A_i et l'amplificateur faible bruit 104 de la chaîne de réception C_RX_i appartenant à ladite paire PA_i. Ledit circuit analogique CIR_ANN_1 est configuré pour retrancher à un signal reçu par le deuxième dispositif DC_2 ladite estimation fournie par le premier module d'estimation MOD EST_1. De plus, lesdits moyens analogiques et numériques comportent aussi un circuit numérique CIR_ANN_2, de conception connu en soi, agencé entre le convertisseur analogique-numérique 106 de ladite chaîne de réception C_RX_i et l'unité DSP. Ledit circuit numérique CIR_ANN_2 est configuré pour retrancher au signal acheminé depuis l'amplificateur faible bruit 104 ladite estimation fournie par le deuxième module d'estimation MOD_EST_2.

En ce qui concerne la façon dont lesdites estimations des contributions C_1 et C_2 peuvent être déterminées par respectivement le premier module d'estimation MOD_EST_1 et le deuxième module d'estimation MOD_EST_2, l'homme du métier peut consulter le document de A. Sabharwal et al déjà mentionné auparavant qui traite ces aspects en détail. A tout le moins, et d'une manière générale, on note ici que le premier module d'estimation MOD_EST_1 (respectivement le deuxième module d'estimation MOD_EST_2) réalise son estimation en fonction d'un signal émis (respectivement en fonction de séquences de nombres complexes représentatives d'un signal destiné à être émis) par le deuxième dispositif DC_2 et dont il acquiert la connaissance via un prélèvement entre l'amplificateur de puissance 103 et l'antenne A_i (respectivement via un prélèvement entre l'unité DSP et le convertisseur numérique-analogique 101).

Le deuxième dispositif DC_2 comporte également, pour chaque paire PA_i de chaînes, un circuit de jonction 300 agencé entre les chaînes de ladite paire PA_i. Ledit circuit de jonction 300 est configuré pour réaliser, en combinaison avec les moyens de commutation déjà mentionnés ci-avant et en fonction d'une configuration particulière de ces derniers, une jonction entre la chaîne d'émission C_TX_i et la chaîne de réception C_RX_i formant ladite paire PA_i. Plus particulièrement, ladite jonction est destinée à être réalisée, pour chaque chaîne G TX_i/G_RX_i, au niveau de la partie interne de ladite chaîne G TX i/G RX_i, entre le deuxième port PO_2 du déphaseur passif DP TX_i/DP_RX_i intégré à ladite chaîne C_TX_i/C_RX_i et le composant de ladite partie interne agencé au plus proche dudit déphaseur passif DP_TX_i/DP_RX_i (i.e. le modulateur 102/le démodulateur 105 dans le présent exemple de réalisation).

En outre, ledit circuit de jonction 300 est configuré de sorte qu'une énergie électromagnétique (par exemple l'énergie électromagnétique associée à un faisceau de transmission) acheminée en entrée dudit circuit de jonction 300 est transmise en sortie de ce dernier.

Par exemple, et tel qu'illustré par la figure 2, ledit circuit de jonction 300 est un fil électrique comportant deux extrémités formant chacune un point de connexion. Une première extrémité, dite « extrémité E », forme une entrée/sortie dudit circuit de jonction 300 et est destinée à être connectée, via lesdits moyens de commutation, à la chaîne d'émission C_TX_i. Une deuxième extrémité, dite « extrémité R », forme également une entrée/sortie dudit circuit de jonction 300 et est quant à elle destinée à être connectée, via lesdits moyens de commutation, à la chaîne de réception C_RX_i.

Bien entendu, rien n'exclut de considérer un circuit de jonction autre qu'un unique fil électrique dès lors que ce dernier est apte à réaliser, en combinaison avec les moyens de commutation et en fonction d'une configuration particulière de ces derniers, une jonction entre la chaîne d'émission C_TX_i et la chaîne de réception C_RX_i, ainsi qu'à permettre la transmission d'énergie électromagnétique entre lesdites chaînes C_TX_i, C_RX_i.

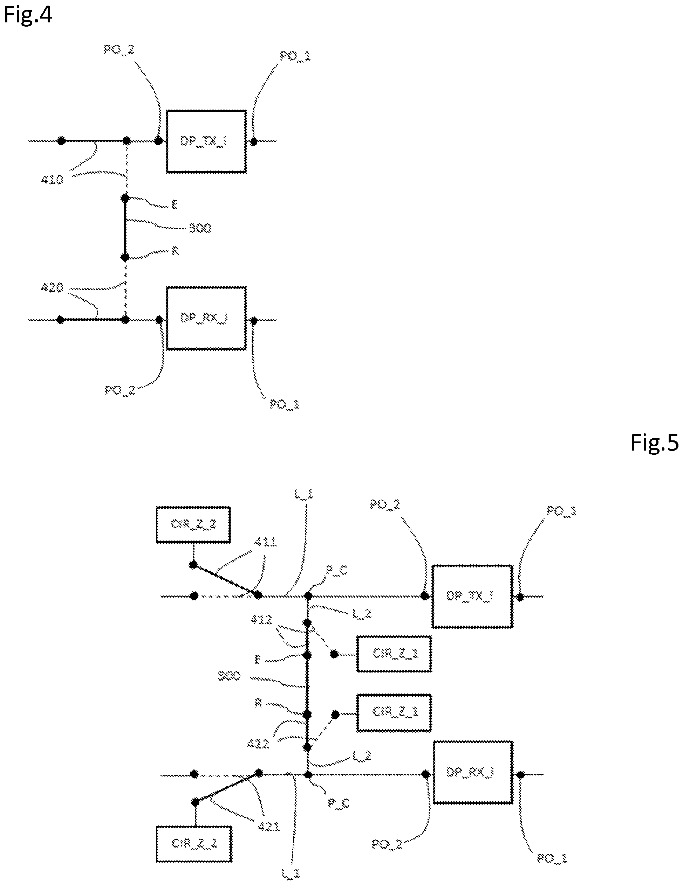

Le deuxième dispositif DC_2 comporte également, comme cela a déjà été mentionné ci-avant, des moyens de commutation 400. Lesdits moyens de commutation 400 sont représentés de manière schématique dans la figure 2. Des modes de réalisation plus spécifiques desdits moyens de commutation sont décrits en détail ci-après en considérant un premier mode de réalisation dans lequel les moyens de commutation comportent, pour chaque déphaseur passif, un inverseur (figure 4) ou bien deux inverseurs (figure 5).

Dans le présent exemple de réalisation, et tel qu'illustré par la figure 2, le deuxième dispositif de communication DC_2 comporte un module de contrôle MOD_CO configuré pour mettre en oeuvre des traitements visant à permettre au deuxième dispositif de communication DC_2 d'émettre un ou plusieurs faisceaux de transmission, recevoir un ou plusieurs faisceaux de transmission (éventuellement de manière simultanée à l'émission d'un ou plusieurs faisceaux de transmission) ou bien encore réfléchir un ou plusieurs faisceaux de transmission reçus au niveau des antennes élémentaires A_1, ..., A_N, en mettant en oeuvre un procédé de contrôle du fonctionnement dudit dispositif DC_2.

La figure 3 est une représentation schématique alternative de l'architecture matérielle du deuxième dispositif de contrôle DC_2 selon l'invention pour mettre en oeuvre ledit procédé de contrôle.

Tel qu'illustré par la figure 3, le deuxième dispositif DC_2 dispose de l'architecture matérielle d'un ordinateur. Ainsi, ledit deuxième dispositif DC_2 comporte, notamment, un processeur 1, une mémoire vive 2, une mémoire morte 3 et une mémoire non volatile 4. Il dispose en outre d'un module de communication 5.

La mémoire morte 3 du deuxième dispositif DC_2 constitue un support d'enregistrement conforme à l'invention, lisible par le processeur 1 et sur lequel est enregistré un programme d'ordinateur PROG conforme à l'invention, comportant des instructions pour l'exécution d'étapes du procédé de contrôle selon l'invention. Le programme PROG permet de définir le module de contrôle MOD_CO en tant que module fonctionnel dudit deuxième dispositif DC_2. Ledit module de contrôle MOD_CO est configuré pour commander, en s'appuyant sur les éléments matériels 1 à 5 du deuxième dispositif DC_2 cités précédemment, lesdits moyens de commutation 400 et pour activer/désactiver lesdits moyens analogiques et numériques d'annulation d'interférences ainsi que tout ou partie des chaînes d'émission C_TX_i et de réception C_RX_i, de sorte que le deuxième dispositif DC_2 est apte à alterner entre quatre modes distincts.

Par « activation/désactivation » d'une chaîne ou d'une partie d'une chaîne, on fait référence ici à l'activation/désactivation de tous les composants ou bien de seulement une partie des composants formant ladite chaîne.

Dans cet exemple de réalisation, on considère que le module de contrôle MOD_CO est également configuré pour déterminer les poids qu'ils convient d'affecter aux différents déphaseurs passifs DP_TX_i, DP_RX_i, mais également pour commander ces derniers en fonction des poids qui ont été déterminés.

Rien n'exclut toutefois d'envisager, suivant d'autres exemples non détaillés ici, d'utiliser un module de contrôle autre que le module M_CO et configuré pour déterminer les poids à affecter aux déphaseurs passifs DP_TX_i, DP_RX_i ainsi que pour commander ces derniers en fonction des poids qui ont été déterminés.

Le module de communication 5 permet notamment au module de contrôle MOD_CO de transmettre des signaux de commande aux moyens de commutation 400, aux moyens analogiques et numériques d'annulation d'interférences ainsi qu'aux chaînes d'émission C_TX_i et de réception C_RXJ. Ce module de communication 5 comporte par exemple un bus de données informatiques apte à la transmission desdits signaux de commande. Selon un autre exemple, le module de communication 5 comportent une interface de communication, filaire ou non filaire, apte à mettre en oeuvre tout protocole adapté connu de l'homme du métier (Ethernet, Wifi, Bluetooth, 3G, 4G, 5G, etc.).

Lesdits quatre modes sont respectivement notés M1 (premier mode), M2 (deuxième mode), M3 (troisième mode) et M4 (quatrième mode) pour la suite de la description.

Le premier mode M1 est un mode dans lequel les moyens analogiques et numériques d'annulation d'interférences ainsi que les chaînes d'émission C_TX_i et de réception C_RX_i sont activés, les déphaseurs DP_TX_i, DP_RX_i étant connectés à leurs chaînes respectives C_TX_i, C_RX_i via leur deuxième port PO_2. Autrement dit, ledit mode M1 correspond à un mode dans lequel le deuxième dispositif DC_2 est apte à émettre et recevoir simultanément un ou plusieurs faisceaux de transmission. Le mode M1 correspond donc à un mode full duplex.

Le deuxième mode M2 est un mode dans lequel les chaînes C_TX_i, C_RX_i, hormis leurs amplificateurs 103, 104 respectifs, sont désactivées. En outre, dans ledit deuxième mode M2, le deuxième port PO_2 d'un déphaseur DP_TX_i/DP_RX_i intégré à une chaîne C_TX_i/C_RX_i d'une paire PA_i de chaînes est connecté, via le circuit de jonction 300 associé à ladite paire PA_i, au deuxième port PO_2 du déphaseur DP_RX_i/DP_TX_i intégré à l'autre chaîne C_RX_i/C_TX_i de ladite paire PA J.

Ledit mode M2 correspond à un mode dans lequel le deuxième dispositif DC_2 est configuré pour réfléchir un ou plusieurs faisceaux de transmission dans une direction déterminée par la configuration des déphaseurs passifs (i.e. dans une direction déterminée en fonction des poids associés aux déphaseurs passifs). Une telle réflexion est permise en raison de la jonction réalisée entre les chaînes C_TX_i, C_RX_i de chacune de paires PA_i du fait d'une configuration adaptée, et commandée par le module de contrôle MOD_CO, des moyens de commutation 400 en combinaison avec le circuit de jonction 300.

En effet, l'énergie électromagnétique associée à un faisceau incident à une antenne A_i est redirigée dans une direction déterminée de l'espace du fait de ladite configuration des déphaseurs DP_TX_i, DP_RX_i, et après avoir transité par une partie des chaînes au moyen de la jonction ainsi établie par combinaison des moyens de commutation 400 et du circuit de jonction 300.

Il convient de noter que dans ce deuxième mode M2, lesdits moyens analogiques d'annulation d'interférences peuvent être soit activés, soit désactivés. Préférentiellement, lesdits moyens analogiques d'annulation d'interférences sont activés, permettant ainsi d'éviter certains effets indésirables pouvant être rencontrés lors de la transmission de signaux RF, comme par exemple typiquement l'effet Larsen.

Le troisième mode M3 est un mode dans lequel les chaînes d'émission C_TX_i/de réception C_RX_i sont activées/désactivées, les déphaseurs DP_TX_i du premier ensemble E_1 étant connectés à leurs chaînes d'émission C_TX_i respectives via leur deuxième port PO_2. Autrement dit, ledit mode M3 correspond à un mode dans lequel le deuxième dispositif DC_2 est apte à émettre un ou plusieurs faisceaux de transmission, mais n'est par contre pas apte à recevoir un ou plusieurs faisceaux de transmission.

Il convient de noter que dans ce troisième mode M3, lesdits moyens analogiques et numériques d'annulation d'interférences peuvent être soit activés, soit désactivés. En effet, dans la mesure où le deuxième dispositif DC_2 n'est pas en mesure de recevoir de faisceaux de transmission, lesdits moyens analogiques et numériques d'annulation d'interférence ne jouent aucun rôle. Cela étant, et pour des raisons de réduction de la consommation d'énergie du deuxième dispositif DC_2, lesdits moyens d'annulation sont préférentiellement désactivés dans ledit troisième mode M3.

Le quatrième mode M4 est un mode dans lequel les chaînes d'émission C_TX_i/de réception C_RX_i sont désactivées/activées, les déphaseurs DP_RX_i du deuxième ensemble E_2 étant connectés à leurs chaînes de réception C_RX_i respectives via leur deuxième port PO_2. Autrement dit, ledit quatrième mode M4 correspond à un mode dans lequel le deuxième dispositif DC_2 est apte à recevoir un ou plusieurs faisceaux de transmission, mais n'est par contre pas apte à émettre un ou plusieurs faisceaux de transmission.

Il convient de noter que, de manière similaire à ce qui a été décrit ci-avant dans le cas du troisième mode M3, lesdits moyens analogiques et numériques d'annulation d'interférences peuvent être soit activés, soit désactivés dans le quatrième mode M4. A nouveau, pour des raisons de réduction de la consommation d'énergie du deuxième dispositif DC_2, lesdits moyens d'annulation sont préférentiellement désactivés dans ledit quatrième mode M4.

Dans un mode plus particulier de réalisation, l'amplificateur de puissance 103 et l'amplificateur faible bruit 104 appartenant à chaque paire PA_i de chaînes sont configurés de sorte que le produit de leurs gains respectifs est inférieur ou égal à 1 lorsque le deuxième dispositif DC_2 est configuré selon le deuxième mode M2. De telles dispositions permettent avantageusement d'éviter certains effets indésirables pouvant être rencontrés lors de la transmission de signaux RF, comme par exemple typiquement l'effet Larsen.

Le contrôle du fonctionnement du deuxième dispositif DC_2, mis en oeuvre par le module de contrôle MOD_CO, permet donc d'alterner entre les quatre modes M1, M2, M3 et M4. Le fait de permettre au dispositif DC_2 de fonctionner selon ledit deuxième mode M2 est particulièrement avantageux. En effet, lorsque les déphaseurs passifs DP_TX_i, DP_RX_i sont configurés de manière appropriée, cela offre la possibilité d'améliorer les communications éventuelles entre le premier dispositif de communication DC_1 et le troisième dispositif de communication DC_3 du système 10, le deuxième dispositif de communication DC_2 jouant ainsi le rôle d'une surface intelligente.

Ceci est avantageux dans la mesure où le deuxième dispositif de communication DC_2 peut correspondre à un équipement déjà présent dans l'environnement desdits premier et troisième dispositifs de communication. Autrement dit, en configurant selon l'invention un dispositif de communication traditionnel (terminal mobile, station de base, etc.) présentant une architecture full-duplex, il n'est pas nécessaire d'utiliser, comme cela est fait dans l'état de l'art, de surfaces intelligentes coûteuses et complexes à mettre en oeuvre.

Dans un mode plus particulier de réalisation, le module de contrôle MOD_CO est configuré pour mettre en oeuvre l'alternance entre lesdits quatre modes M1, M2, M3 et M4 suivant un schéma temporel prédéterminé.

Par « schéma temporel prédéterminé », on fait référence ici au fait que des périodes temporelles déterminées sont allouées à chacun desdits quatre modes, le contrôle du fonctionnement du deuxième dispositif DC_2 étant réalisé de sorte que ces périodes temporelles sont respectées.

A titre d'exemple nullement limitatif, ledit schéma temporel déterminé est conforme à un protocole de télécommunication. Un tel protocole peut être spécifié dans une norme de télécommunication, par exemple une norme 3GPP (acronyme de l'expression anglo-saxonne « 3rd Génération Partnership Project »)

Selon un autre exemple, ou bien éventuellement suivant une mise en oeuvre particulière d'un protocole de télécommunication, le schéma temporel déterminé comporte :
- une première période temporelle en cours de journée pendant laquelle le deuxième dispositif DC_2 alterne uniquement entre les premier M1, troisième M3 et quatrième M4 modes,
- une deuxième période temporelle en cours de nuit pendant laquelle le deuxième dispositif de communication DC_2 fonctionne uniquement selon ledit deuxième mode M2,
les durées respectives desdites première et deuxième périodes temporelles pouvant par exemple être fixées par un opérateur en charge de l'exploitation du réseau de télécommunication.

D'une manière générale, aucune limitation n'est attachée à la durée et au nombre desdites périodes temporelles, et donc in fine à la structure dudit schéma temporel déterminé. En outre, un tel schéma temporel déterminé est non seulement connu du deuxième dispositif de communication DC_2, mais peut éventuellement l'être également des premier et troisième dispositifs de communication DC_1, DC_3.

En alternative, le module de contrôle MOD_CO est configuré pour mettre en oeuvre l'alternance entre lesdits quatre modes M1, M2, M3 et M4 suivant un schéma temporel dynamique.

Par « schéma temporel dynamique », on fait référence ici à un schéma temporel selon lequel l'alternance entre les quatre modes de fonctionnement du deuxième dispositif DC_2 s'effectue suivant des périodes temporelles qui ne sont pas prédéterminées. Autrement dit, l'alternance entre les quatre modes peut s'effectuer librement, à la volée.

Par exemple, des messages de signalisation peuvent être échangés de manière dynamique entre les dispositifs DC_1, DC_2 et DC_3. Ces messages sont configurés de sorte qu'une fois reçus par le deuxième dispositif DC_2 (respectivement par les premier et troisième dispositifs DC_1, DC_3), ce dernier sait dans quel mode il doit fonctionner (respectivement ces derniers savent dans quel mode le deuxième dispositif DC_2 est configuré).

Il ressort de la description desdits quatre modes de fonctionnement M1, M2, M3 et M4 du deuxième dispositif DC_2 que les moyens de commutation 400 ont pour fonction, et ce quel que soit le mode de réalisation envisagé pour ces derniers, de :
- relier les déphaseurs DP_TX_i et DP_RX_i respectivement intégrés aux chaînes C_TX_i et C_RX_i aux parties internes desdites chaînes lorsqu'ils sont configurés suivant une première configuration. Ladite liaison s'effectue ici plus particulièrement au niveau des deuxièmes ports PO_2 desdits déphaseurs ;
- relier le circuit de jonction 300 aux chaînes d'émission C_TX_i et de réception C_RX_i lorsqu'ils sont configurés suivant une deuxième configuration. In fine, dans cette deuxième configuration, lesdits moyens de commutation 400 permettent également d'isoler les déphaseurs DP_TX_i et DP_RX_i respectivement intégrés aux chaînes C_TX_i et C_RX_i des parties internes de ces chaînes. Par « isoler », on fait référence au fait qu'aucune énergie ne peut être transmise entre les déphaseurs et les parties internes des chaînes.

La suite de la description vise à décrire plus en détail des modes de réalisation plus particuliers des moyens de commutation 400 de la figure 2.

La figure 4 représente schématiquement un premier mode particulier de réalisation des moyens de commutation selon une vue partielle agrandie du deuxième dispositif DC_2 au niveau d'une paire PA_i de chaînes C_TX_i, C_RX_i.

Tel qu'illustré par la figure 4, les moyens de commutation comportent dans ledit premier mode de réalisation, et pour chaque déphaseur passif DP_TX_i, DP_RX_i, un inverseur 410, 420 (la référence « 410 » étant associé à un déphaseur DP_TX_i, et la référence « 420 » à un déphaseur DP_RX_i). De manière connue en soi, ledit inverseur comporte au moins deux voies activables pour réaliser des connexions suivant lesdites au moins deux voies. Dans ledit premier mode de réalisation, l'inverseur 410, 420 associé à un déphaseur DP_TX_i, DP_RX_i est configurable suivant deux configurations :
- une première configuration dans laquelle ledit inverseur 410 420 connecte le deuxième port PO_2 dudit déphaseur DP_TX_i, DP_RX_i à la chaîne C_TX_i, C_RX_i (plus particulièrement à la partie interne de ladite chaîne C_TX_i, C_RX_i) à laquelle est intégré ledit déphaseur DP_TX_i, DP_RX_i. Ainsi, dans cette première configuration, ladite connexion s'effectue par activation d'une première voie de l'inverseur 410, 420,
- une deuxième configuration dans laquelle ledit inverseur 410 420 connecte le deuxième port PO_2 dudit déphaseur DP_TX_i, DP_RX_i au circuit de jonction 300 associé à la paire PA_i de chaînes comprenant la chaîne C_TX_i, C_RX_i à laquelle est intégré ledit déphaseur DP_TX_i, DP_RX_i. Plus particulièrement, dans cet exemple de réalisation, le deuxième port PO_2 du déphaseur DP TX_i (respectivement du déphaseur DP_RX_i) est connecté à l'extrémité E (respectivement à l'extrémité R) du circuit de jonction 300. Ainsi, dans cette deuxième configuration, ladite connexion s'effectue par activation d'une deuxième voie de l'inverseur 410, 420.

Il est à noter que dans la figure 4, lesdits inverseurs sont tous configurés, à titre illustratif, selon leur première configuration (la première voie de chaque inverseur 410, 420 étant représentée en trait plein, la deuxième voie étant quant à elle représentée en traits pointillés).

Il ressort de la description des différentes configurations des inverseurs 410, 420 que, dans le premier mode M1 du deuxième dispositif DC_2, l'inverseur 410, 420 de chaque déphaseur DP_TX_i, DP_RX_i desdits premier et deuxième ensembles E_1, E_2 est configuré dans sa première configuration.

Dans le deuxième mode M2 du deuxième dispositif DC_2, l'inverseur 410, 420 de chaque déphaseur DP_TX_i, DP_RX_i desdits premier et deuxième ensembles E_1, E_2 est configuré dans sa deuxième configuration.

Dans le troisième mode M3 du deuxième dispositif DC_2, l'inverseur 410 de chaque déphaseur DP_TX_i du premier ensemble E_1 est configuré dans sa première configuration. En outre, dans ce troisième mode M3, la configuration l'inverseur 420 de chaque déphaseur DP_RX_i du deuxième ensemble E_2 est quant à elle quelconque étant donné que la chaîne de réception C_RX_i à laquelle est intégré ledit déphaseur DP_RX_i est désactivée.

Dans le quatrième mode M4 du deuxième dispositif DC_2, l'inverseur 420 de chaque déphaseur DP_RX_i du deuxième ensemble E_2 est configuré dans sa première configuration. En outre, dans ce quatrième mode M4, la configuration de l'inverseur 410 de chaque déphaseur DP_TX_i du premier ensemble E_1 est quant à elle quelconque étant donné que la chaîne d'émission C_TX_i à laquelle est intégré ledit déphaseur DP_TX_i est désactivée.

La figure 5 représente schématiquement un deuxième mode particulier de réalisation des moyens de commutation selon une vue partielle agrandie du deuxième dispositif DC_2 au niveau d'une paire PA_i de chaînes C_TX_i, C_RX_i.

Tel qu'illustré par la figure 5, les moyens de commutation comportent dans ledit deuxième mode de réalisation, et pour chaque déphaseur passif DP_TX_i, DP_RX_i, un premier inverseur 411, 412 et un deuxième inverseur 421, 422 reliés à des lignes de transmission respectives L_1, L_2 montées en parallèle et se rejoignant au niveau d'un point de connexion P_C auquel est connecté le deuxième port PO_2 dudit déphaseur DP_TX_i, DP RX_i (les références « 411 » et « 412 » sont associées à un déphaseur DP TX_i, et les références « 421 » et « 422 » sont associées à un déphaseur DP_RX_i).

En outre, chaque inverseur 411, 412, 421, 422 est configurable suivant deux configurations, une première configuration dans laquelle :
- le premier inverseur 411, 421 connecte ledit point de connexion P_C à la chaîne C_TX_i, C_RX_i à laquelle est intégré ledit déphaseur DP_TX_i, DP_RX_i,
- le deuxième inverseur 412, 422 connecte ledit point de connexion P_C à un premier circuit d'adaptation d'impédance CIR_Z_1,
ainsi qu'une deuxième configuration dans laquelle :
- le premier inverseur 411, 421 connecte ledit point de connexion P_C à un deuxième circuit d'adaptation d'impédance CIR_Z_2 distinct dudit premier circuit d'adaptation d'impédance CIR_Z_1,
- le deuxième inverseur 412, 422 connecte ledit point de connexion P_C au circuit de jonction 300 associé à la paire PA_i de chaînes comprenant la chaîne C_TX_i, C_RX_i à laquelle est intégré ledit déphaseur DP_TX_i, DP_RX_i. Plus particulièrement, dans cet exemple de réalisation, le point de connexion P_C associé au déphaseur DP_TX_i (respectivement au déphaseur DP_RX_i) est connecté à l'extrémité E (respectivement à l'extrémité R) du circuit de jonction 300.

Par ailleurs, ledit premier circuit d'impédance GIR Z_1 (respectivement le deuxième circuit d'impédance CIR_Z_2) est configuré pour créer un circuit ouvert au niveau du point de connexion P_C lorsque le deuxième inverseur 412, 422 (respectivement le premier inverseur 411, 421) est configuré dans sa première configuration (respectivement dans sa deuxième configuration).

En créant ainsi un « véritable » circuit ouvert au niveau du point de connexion P_C en fonction des configurations des inverseur 411, 412, 421, 422, lesdits circuits d'impédance CIR_Z_1, CIR_Z_2 permettent de compenser les effets d'un stub ouvert.

Par « stub ouvert » (le terme « stub » provenant de la littérature anglo-saxonne), on fait classiquement référence ici à une ligne terminée par un circuit ouvert placée en parallèle avec une autre ligne. Dans le cas d'espèce, on a par exemple que si chaque inverseur 411, 412, 421, 422 est configuré suivant sa première configuration, la ligne de transmission L_2 formerait un stub ouvert agencé en parallèle de la ligne de transmission L_1 si le circuit d'adaptation d'impédance CIR_Z_1 n'était pas utilisé. Inversement, si chaque inverseur 411, 412, 421, 422 est configuré suivant sa deuxième configuration, la ligne de transmission L_1 formerait un stub ouvert agencé en parallèle de la ligne de transmission L_2 si le circuit d'adaptation d'impédance CIR_Z_2 n'était pas utilisé.

L'existence d'un tel stub ouvert, dans l'hypothèse où les circuits d'adaptation d'impédance CIR_Z_1, CIR_Z_2 ne sont pas utilisés, implique un risque d'apparition de court-circuit au niveau du point de connexion P_C. Plus particulièrement, ce risque se matérialise lorsque la longueur de la ligne de transmission L_1, L_2 associée audit stub ouvert est un multiple rationnel de la longueur d'onde associés aux signaux incidents aux antennes A_i, le multiple rationnel en question étant de la forme 1/4 + n/2 où n est un entier naturel (n supérieur ou égale à 0).

Les circuits d'adaptation d'impédance CIR_Z_1, CIR_Z_2 permettent donc, lorsqu'ils sont configurés de manière appropriée, d'éviter les désagréments liés à un stub ouvert. Cela permet d'optimiser le transfert d'énergie électromagnétique le long des lignes de transmission L_1, L_2, et donc en particulier entre les chaînes des paires PA_i lorsque le deuxième dispositif DC_2 est configuré dans le deuxième mode M2.

Chaque circuit d'adaptation d'impédance CIR_Z_1, CIR_Z_2 peut comporter différents composants électroniques tels que des condensateurs, des inductances, des résistances, etc., et plus largement tout composant électronique présentant une impédance qui lui est propre. D'une manière générale, la conception et la mise en oeuvre d'un circuit d'adaptation d'impédance sont connues de l'homme du métier, de sorte que cet aspect n'est décrit plus avant ici. L'homme du métier sait également comment configurer un circuit d'adaptation d'impédance en fonction de la longueur d'une ligne de transmission pour éviter les risques de court-circuit mentionnés ci-avant. On comprend bien entendu que les configurations respectives des circuits d'adaptation d'impédance CIR_Z_1, CIR_Z_2 dépendent des longueurs respectives des lignes de transmission L_1, L_2 (les lignes de transmission L_1, L_2 associées à une même chaîne pouvant être de longueurs respectives différentes ; cette différence de longueur peut aussi avoir lieu entre lignes de transmission d'une chaîne d'émission et d'une chaîne de réception).

Il est à noter que dans la figure 5, lesdits inverseurs 411, 412, 421, 422sont tous configurés, à titre illustratif, selon leur deuxième configuration.

Il ressort de la description des différentes configurations des inverseurs 411, 412, 421, 422 que, dans le premier mode M1 du deuxième dispositif DC_2, l'inverseur 411, 412, 421, 422 de chaque déphaseur DP_TX_i, DP_RX_i desdits premier et deuxième ensembles E_1, E_2 est configuré dans sa première configuration.

Dans le deuxième mode M2 du deuxième dispositif DC_2, l'inverseur 411, 412, 421, 422 de chaque déphaseur DP_TX_i, DP_RX_i desdits premier et deuxième ensembles E_1, E_2 est configuré dans sa deuxième configuration.

Dans le troisième mode M3 du deuxième dispositif DC_2, le premier inverseur 411 de chaque déphaseur DP_TX_i du premier ensemble E_1 est configuré dans sa première configuration. En outre, dans ce troisième mode M3, la configuration du deuxième inverseur 422 de chaque déphaseur DP_RX_i du deuxième ensemble E_2 est quant à elle quelconque étant donné que la chaîne de réception C_RX_i à laquelle est intégré ledit déphaseur DP RX_i est désactivée.

Dans le quatrième mode M4 du deuxième dispositif DC_2, le deuxième inverseur 422 de chaque déphaseur DP RX_i du deuxième ensemble E_2 est configuré dans sa première configuration. En outre, dans ce quatrième mode M4, la configuration du premier inverseur 411 de chaque déphaseur DP_TX_i du premier ensemble E_1 est quant à elle quelconque étant donné que la chaîne d'émission C_TX_i à laquelle est intégré ledit déphaseur DP_TX_i est désactivée.

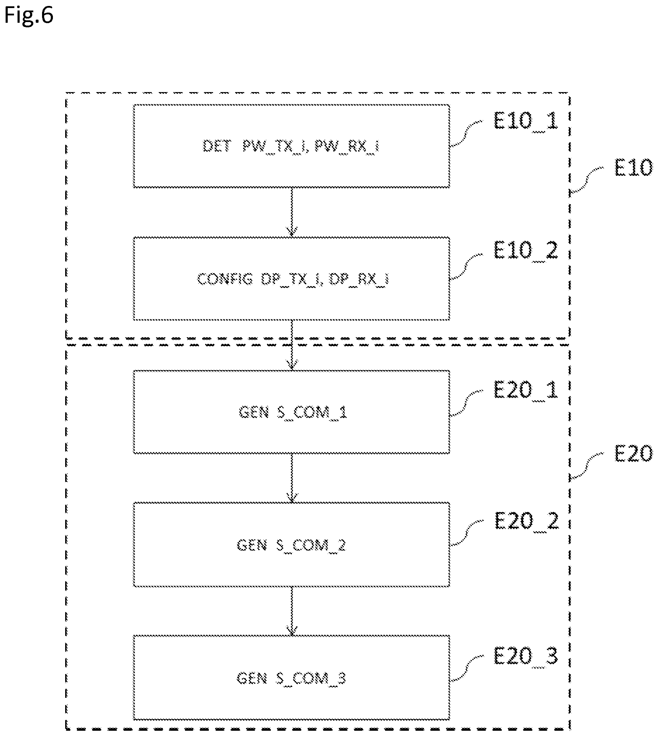

La figure 6 représente, sous forme d'ordinogramme, un exemple particulier de mise en œuvre du procédé de contrôle selon l'invention.

Dans cet exemple particulier de mise en oeuvre, on considère que l'alternance entre les quatre modes distincts associés au deuxième dispositif DC_2 s'effectue suivant un schéma temporel déterminé, et qu'en outre une période temporelle au cours de laquelle ledit dispositif DC_2 est destiné à réfléchir un ou plusieurs faisceaux de transmission (deuxième mode M2) dans une direction donnée débute.

On considère également qu'avant le début de cette période temporelle, ledit deuxième dispositif DC_2 est configuré dans le premier mode M1.

Dès lors, lorsque ladite période temporelle débute, le procédé de contrôle comporte une étape E10 de configuration des déphaseurs passifs DP_TX_i, DP_RX_i.

A cet effet, l'étape E10 comprend dans un premier temps, pour chaque déphaseur passif DP_TX_i, DP_RX_i, une détermination (sous-étape E10_1) d'un poids PW_TX_i, PW_RX_i en fonction de ladite direction dans laquelle le ou les faisceaux sont destinés à être réfléchis.

Puis, l'étape E10 comprend dans un deuxième temps une configuration (sous-étape E10_2) des déphaseurs passifs DP_TX_i, DP_RX_i en fonction des poids PW_TX_i, PW_RX_i qui leur sont respectivement attribués. A cet effet, le module de contrôle MOD_CO génère des signaux de commande appropriés, ces signaux de commande étant transmis aux déphaseurs passifs DP TX_i, DP_RX_i.

Par la suite, le procédé de contrôle comporte une étape E20 de commande des moyens de commutation 400 ainsi que d'activation des moyens analogiques d'annulation d'interférence et de désactivation des chaînes C_TX_i, C_RX_i, hormis leurs amplificateurs 103, 104 respectifs, de sorte que le deuxième dispositif de communication DC_2 passe du premier mode M1 au deuxième mode M2.

A cet effet, le module de contrôle MOD_CO génère des signaux de commande appropriés. Plus particulièrement, et en référence à la figure 6 :
- un premier signal de commande S_COM_1 est généré (sous-étape E20_1) pour faire passer les moyens de commutation 400 dans leur deuxième configuration ;
- un deuxième signal de commande S_COM_2 est généré (sous-étape E20_2) pour activer les premiers modules d'estimation MOD_EST_1 ;
- un troisième signal de commande S_COM_3 est généré (sous-étape E20_3) pour désactiver les C_TX_i, C_RX_i, hormis leurs amplificateurs 103, 104 respectifs.

Bien entendu, l'exemple de mise en oeuvre de la figure 6 est donné ici à titre purement illustratif, le procédé de contrôle selon l'invention ne se limitant en aucun cas à un passage du premier mode au deuxième mode. Ainsi, n'importe quelle séquence formée de passages d'un mode donné à un autre mode donné du deuxième dispositif DC_2 peut être envisagée. Le procédé de contrôle selon l'invention peut dès lors comporter d'autres étapes de commande et/ou d'étapes de configuration de sorte à permettre les passages entre ces différents modes.

Par ailleurs, il importe de noter que l'invention a jusqu'à présent été décrite en considérant que le deuxième dispositif de communication était apte à alterner entre les quatre mode distincts M1, M2, M3 et M4. Cela étant, l'invention reste applicable dès lors que ledit deuxième dispositif de communication DC_2 est apte à alterner entre au moins lesdits premier et deuxième modes M1, M2. Autrement dit, la capacité dudit deuxième dispositif de communication à pouvoir fonctionner, en sus desdits premier et deuxième modes M1, M2, selon au moins l'un desdits troisième et quatrième modes M3, M4 est optionnelle. Ainsi, rien n'exclut que la configuration du deuxième dispositif de communication soit limitée aux modes M1, M2, ou bien aux modes M1, M2 et M3, ou bien encore aux modes M1, M2 et M4.

Le procédé de contrôle a été décrit ci-avant sans faire référence explicitement à une communication entre les dispositifs de communication DC_1, DC_2 et DC_3 formant le système 10. Il importe toutefois de noter que l'invention concerne également un procédé de communication mis en oeuvre par le système 10 de communication sans fil de la figure 1, dans lequel au moins un faisceau de transmission émis par le premier dispositif de communication DC_1 est réfléchi par le deuxième dispositif de communication DC_2 lorsque ledit deuxième dispositif de communication DC_2 est dans ledit deuxième mode M2 et reçu par le troisième dispositif de communication DC_3 (une telle réflexion est représentée à titre illustratif au moyen de flèches en pointillés dans la figure 1).

On comprend bien entendu que le deuxième dispositif de communication DC_2 alterne entre différents modes au cours du procédé de communication. Autrement dit, le procédé de contrôle décrit ci-avant est lui-même mis en oeuvre de manière implicite lors de l'exécution du procédé de communication.

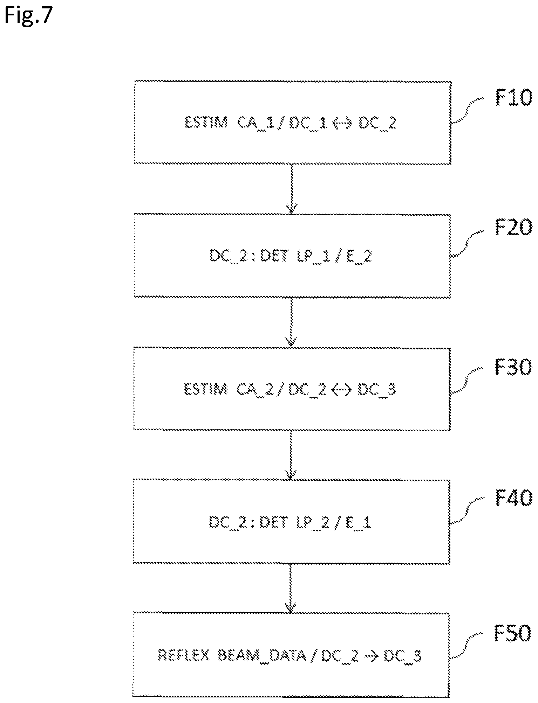

La figure 7 représente, sous forme d'ordinogramme, un exemple particulier de mise en oeuvre du procédé de communication selon l'invention.

Dans l'exemple de la figure 7, le procédé de communication comportant une étape F10 d'estimation d'un premier canal de propagation CA_1 entre les premier et deuxième dispositifs de communication DC_1, DC_2.

Ladite étape F10 est mise en oeuvre de manière connue en soi par lesdits premier et deuxième dispositifs de communication DC_1, DC_2. Par exemple, le premier dispositif de communication DC_1 transmet audit deuxième dispositif de communication DC_2 des messages contenant des symboles pilotes permettant de réaliser l'estimation dudit premier canal. Aussi, dans cet exemple, le deuxième dispositif de communication DC_2 est dans le premier mode M1 ou bien le quatrième mode M4.

Le procédé de communication comporte également une étape F20 de détermination, par le deuxième dispositif de communication DC_2 et en fonction de l'estimation du premier canal de propagation CA_1, d'une première loi de phase LP_1 apte à configurer les déphaseurs passifs DP_RX_i du deuxième ensemble E_2 de sorte à privilégier la réception d'au moins un faisceau de transmission en provenance du premier dispositif de communication DC_1.

Une telle loi de phase LP_1 correspondant à un ensemble de poids (une matrice de poids) destinés à être affectés aux déphaseurs passifs DP RX_i afin de configurer ces derniers de sorte à privilégier ladite réception en provenance du premier dispositif de communication DC_1.

Le procédé de communication comportant aussi une étape F30 d'estimation d'un deuxième canal de propagation CA_2 entre les deuxième et troisième dispositifs de communication DC_2, DC_3.

Le procédé de communication comporte également une étape F40 de détermination, par le deuxième dispositif de communication DC_2 et en fonction de l'estimation du deuxième canal de propagation CA_2, d'une deuxième loi de phase LP_2 apte à configurer les déphaseurs passifs D_TX_i dudit premier ensemble E_1 de sorte à privilégier une émission de faisceau de transmission en direction dudit troisième dispositif de communication DC_3.

Lesdites étapes F30 et F40 sont mises en oeuvre de manière similaire aux étapes F10 et F20 respectivement.

Finalement, dans cet exemple de mise en oeuvre, le procédé de communication comporte une étape F50 de réflexion, par le deuxième dispositif de communication DC_2 configuré dans ledit deuxième mode M2, d'au moins un faisceau de transmission BEAM vers le troisième dispositif DC_3, lesdites première LP_1 et deuxième LP_2 lois de phase étant appliquées simultanément par respectivement les déphaseurs DP_RX_i du deuxième ensemble E_2 et les déphaseurs DP_TX_i du premier ensemble E_1.

L'exemple de mise en oeuvre du procédé de communication de la figure 7 a été décrit en considérant que les étapes d'estimation des premier et deuxième canaux de propagation CA_1, CA_2 (étapes F10 et F30), ainsi que les étapes de détermination des première, deuxième et troisième lois de phase LP_1, LP_2 et LP_3 (étapes F20, F40 et F50) étaient mises en oeuvre par le deuxième dispositif de communication DC_2. Toutefois, l'invention couvre également le cas où au moins une de ces étapes est mise en oeuvre par des moyens de traitement distincts des dispositifs de communication et configurés pour réaliser des simulations numériques sur la base desquelles l'estimation et/ou la détermination concernée est obtenue.

Par ailleurs, et de manière similaire à ce qui a été mentionné auparavant dans le cadre du procédé de contrôle, le procédé de communication selon l'invention couvre non seulement le cas où les dispositifs de communication DC_1, DC_2 et DC_3 communiquent entre eux par réflexion d'au moins un faisceau de données, mais également les cas où ces derniers échangent des données entre eux de manière conventionnelle (i.e. au moyen de leurs chaînes d'émission/réception respectives).

L'invention a été décrite jusqu'à présent en considérant que seul le deuxième dispositif de communication DC_2 était conforme à l'invention. Il va de soi que l'invention reste applicable si le premier dispositif de communication DC_1 et/ou le troisième dispositif de communication DC_3 est/sont également conforme(s) à l'invention.

L'invention a également été décrite en considérant que chaque paire PA_i de chaînes était associée à une seule antenne A_i. L'invention ne se limite néanmoins pas à une telle mise en œuvre. En effet, rien n'exclut d'envisager un mode de réalisation dans lequel le dispositif de communication selon l'invention comporte une pluralité d'antennes d'émission ainsi qu'une pluralité d'antennes de réception, chaque chaîne d'émission étant reliée à une unique antenne d'émission et chaque chaîne de réception étant reliée à une unique antenne de réception. Autrement dit, dans ce cas, chaque paire de chaînes est associée à une paire d'antennes (une antenne d'émission et une antenne de réception).

Enfin, l'invention a également été décrite jusqu'à présent en considérant qu'un seul module de contrôle MOD_CO était mis en oeuvre pour réaliser trois fonctions : commander les moyens de commutation (fonction 1) et activer/désactiver les moyens analogiques et numériques d'annulation d'interférences (fonction 2) ainsi que tout ou partie des chaînes d'émission et de réception (fonction 3). Rien n'exclut cependant d'envisager d'avoir une pluralité de modules de contrôle, aptes à réaliser chacun une ou deux desdites fonctions 1 à 3.

## Revendications

1. Dispositif de communication sans fil (DC_2) présentant une architecture configurée pour émettre et recevoir des faisceaux de transmission en mode full-duplex via un réseau d'antennes élémentaires (A_i) et comportant des déphaseurs passifs (DP_TX_i, DP_RX_i) répartis suivant un premier ensemble et un deuxième ensemble, lesdits déphaseurs comportant chacun un premier port (PO_1) et un deuxième port (PO_2), les déphaseurs du premier ensemble/deuxième ensemble étant respectivement connectés, via leurs premiers ports, à des amplificateurs de puissance (103)/faible bruit (104) de chaînes d'émission (C_TX_i)/de réception (C_RX_i) reliées auxdites antennes élémentaires, chaque chaîne d'émission/de réception étant associée à une chaîne de réception/d'émission de sorte à former une paire (PA_i) de chaînes, un circuit de jonction (300) étant agencé entre les chaînes de chaque paire de chaînes, ledit dispositif comportant en outre au moins un module de contrôle (MOD_CO) configuré pour commander des moyens de commutation (400) dudit dispositif et pour activer/désactiver des moyens analogiques (MOD_EST_1) et numériques (MOD_EST_2) d'annulation d'interférences dudit dispositif ainsi que tout ou partie des chaînes d'émission et de réception, de sorte que le dispositif est apte à alterner entre au moins deux modes distincts :
- un premier mode dans lequel les moyens d'annulation ainsi que les chaînes d'émission et de réception sont activés, les déphaseurs étant connectés à leurs chaînes respectives via leur deuxième port,
- un deuxième mode dans lequel les chaînes, hormis leurs amplificateurs respectifs, sont désactivées, le deuxième port d'un déphaseur intégré à une chaîne d'une paire de chaînes étant connecté, via le circuit de jonction associé à ladite paire, au deuxième port du déphaseur intégré à l'autre chaîne de ladite paire.

2. Dispositif (DC_2) selon la revendication 1, dans lequel les moyens de commutation comportent, pour chaque déphaseur passif (DP_TX_i, DP_RX_i), un inverseur (410, 420) configurable suivant deux configurations :
- une première configuration dans laquelle ledit inverseur connecte le deuxième port (PO_2) dudit déphaseur à la chaîne (C_TX_i, C_RX_i) à laquelle est intégré ledit déphaseur,
- une deuxième configuration dans laquelle ledit inverseur connecte le deuxième port dudit déphaseur au circuit de jonction (300) associé à la paire (PA_i) de chaînes comprenant la chaîne à laquelle est intégré ledit déphaseur.

3. Dispositif (DC_2) selon la revendication 1, dans lequel les moyens de commutation comportent, pour chaque déphaseur passif (DP TX_i, DP_RX_i), un premier inverseur (411, 421) et un deuxième inverseur (412, 422) reliés à des lignes de transmission (L_1, L_2) respectives montées en parallèle et se rejoignant au niveau d'un point de connexion (P_C) auquel est connecté le deuxième port (PO_2) dudit déphaseur, chaque inverseur étant configurable suivant deux configurations, une première configuration dans laquelle :
- le premier inverseur connecte ledit point de connexion à la chaîne (C_TX_i, C_RX_i) à laquelle est intégré ledit déphaseur,
- le deuxième inverseur connecte ledit point de connexion à un premier circuit d'adaptation d'impédance (CIR_Z_1),
ainsi qu'une deuxième configuration dans laquelle :
- le premier inverseur connecte ledit point de connexion à un deuxième circuit d'adaptation d'impédance (CIR_Z_2) distinct dudit premier circuit d'adaptation d'impédance,
- le deuxième inverseur connecte ledit point de connexion au circuit de jonction (300) associé à la paire (PA_i) de chaînes comprenant la chaîne à laquelle est intégré ledit déphaseur,
ledit premier/deuxième circuit d'impédance étant configuré pour créer un circuit ouvert au niveau du point de connexion lorsque le deuxième inverseur /premier inverseur est configuré dans sa première configuration/deuxième configuration.

4. Dispositif (DC_2) selon l'une quelconque des revendications 1 à 3, dans lequel ledit au moins un module de contrôle est configuré pour mettre en oeuvre l'alternance entre lesdits au moins deux modes distincts suivant un schéma temporel déterminé.

5. Dispositif (DC_2) selon l'une quelconque des revendications 1 à 3, dans lequel ledit au moins un module de contrôle est configuré pour mettre en oeuvre l'alternance entre lesdits au moins deux modes distincts suivant un schéma temporel dynamique.

6. Dispositif (DC_2) selon l'une quelconque des revendications 1 à 5, dans lequel l'amplificateur de puissance (103) et l'amplificateur faible bruit (104) appartenant à chaque paire (PA_i) de chaînes sont configurés de sorte que le produit de leurs gains respectifs est inférieur ou égal à 1 lorsque le dispositif est configuré selon le deuxième mode.

7. Dispositif (DC_2) selon l'une quelconque des revendications 1 à 6, dans lequel les moyens analogique d'annulation sont activés dans le deuxième mode.

8. Dispositif (DC_2) selon l'une quelconque des revendications 1 à 7, dans lequel ledit au moins un module de contrôle (MOD_CO) est configuré pour commander les moyens de commutation (400) et pour activer/désactiver les moyens analogiques (MOD_EST_1) et numériques (MOD_EST_2) d'annulation d'interférences ainsi que tout ou partie des chaînes d'émission et de réception, de sorte que le dispositif est apte à alterner entre le premier mode, le deuxième mode et au moins un mode parmi :
- un troisième mode dans lequel les chaînes d'émission (C_TX_i)/de réception (C_RX_i) sont activées/désactivées, les déphaseurs (DP_TX_i) du premier ensemble étant connectés à leurs chaînes d'émission respectives via leur deuxième port (PO_2),
- un quatrième mode dans lequel les chaînes d'émission/de réception sont désactivées/activées, les déphaseurs (DP_RX_i) du deuxième ensemble étant connectés à leurs chaînes de réception respectives via leur deuxième port.

9. Système (10) de communication sans fil comportant :
- un premier dispositif de communication sans fil (DC_1) configuré pour émettre au moins un faisceau de transmission,
- un deuxième dispositif de communication sans fil (DC_2) selon l'une quelconque des revendications 1 à 8, apte à réfléchir au moins un desdits faisceaux de transmission dans une direction déterminée lorsqu'il est configuré selon ledit deuxième mode,
- un troisième dispositif de communication sans fil (DC_3) configuré pour recevoir ledit au moins un faisceau de transmission réfléchi par ledit deuxième dispositif de communication.

10. Procédé de contrôle du fonctionnement d'un dispositif de communication sans fil (DC_2) selon l'une quelconque des revendications 1 à 8, ledit procédé de contrôle étant mis en oeuvre par ledit au moins un module de contrôle (MOD_CO) dudit dispositif de communication sans fil, et dans lequel les moyens de commutation (400) sont commandés et les moyens analogiques (MOD_EST_1) et numériques (MOD_EST_2) d'annulation d'interférences dudit dispositif ainsi que tout ou partie des chaînes d'émission et de réception sont activés ou désactivés (E20) de sorte que ledit dispositif de communication sans fil alterne entre lesdits au moins deux modes distincts.

11. Programme d'ordinateur comportant des instructions pour la mise en oeuvre d'un procédé de contrôle selon la revendication 10 lorsque ledit programme est exécuté par au moins un ordinateur contrôlant un dispositif selon l'une quelconque des revendications 1-8.

12. Support d'enregistrement lisible par un ordinateur sur lequel est enregistré un programme d'ordinateur selon la revendication 11.

13. Procédé de communication mis en oeuvre par un système (10) de communication sans fil selon la revendication 9, dans lequel au moins un faisceau de transmission émis par le premier dispositif de communication (DC_1) est réfléchi par le deuxième dispositif de communication (DC_2) lorsque ledit deuxième dispositif de communication est dans ledit deuxième mode et reçu par le troisième dispositif de communication (DC_3).

14. Procédé selon la revendication 13, dans lequel le deuxième dispositif de communication sans fil comporte des déphaseurs passifs (DP_TX_i, DP_RX_i) répartis suivant un premier ensemble (E_1) et un deuxième ensemble (E_2), les déphaseurs du premier ensemble/deuxième ensemble étant connectés à des chaînes d'émission (C_TX_i)/de réception (C_RX_i) respectives, ledit procédé comportant des étapes de :
- estimation (F10) d'un premier canal de propagation (CA_1) entre les premier et deuxième dispositifs de communication (DC_1, DC_2),
- détermination (F20), par le deuxième dispositif de communication et en fonction de l'estimation du premier canal de propagation, d'une première loi de phase (LP_1) apte à configurer les déphaseurs passifs dudit deuxième ensemble de sorte à privilégier la réception dudit au moins un faisceau de transmission en provenance du premier dispositif de communication,
- estimation (F30) d'un deuxième canal de propagation (CA_2) entre les deuxième et troisième dispositifs de communication (DC_2, DC_3),
- détermination (F40), par le deuxième dispositif de communication et en fonction de l'estimation du deuxième canal de propagation, d'une deuxième loi de phase (LP_2) apte à configurer les déphaseurs passifs dudit premier ensemble de sorte à privilégier une émission de faisceau de transmission en direction dudit troisième dispositif de communication,
- réflexion (F50), par le deuxième dispositif de communication configuré dans ledit deuxième mode, dudit au moins un faisceau de transmission vers le troisième dispositif de communication, lesdites première et deuxième lois de phase étant appliquées simultanément par respectivement les déphaseurs du deuxième ensemble et les déphaseurs du premier ensemble.

## Patentansprüche

1. Drahtloskommunikationsvorrichtung (DC_2), die eine Architektur aufweist, die dazu konfiguriert ist, Übertragungsstrahlen im Vollduplexmodus über eine Gruppe von Elementarantennen (A_i) zu senden und zu empfangen, und passive Phasenschieber (DP_TX_i, DP_RX_i) umfasst, die gemäß einem ersten Satz und einem zweiten Satz verteilt sind, wobei die Phasenschieber jeweils einen ersten Port (PO_1) und einen zweiten Port (PO_2) umfassen, wobei die Phasenschieber des ersten Satzes/zweiten Satzes über ihre ersten Ports jeweils mit Leistungsverstärkern (103)/rauscharmen Verstärkern (104) von Sendeketten (C_TX_i)/Empfangsketten (C_RX_i), die an die Elementarantennen angeschlossen sind, verbunden sind, wobei jede Sende-/Empfangskette mit einer Empfangs-/Sendekette derart assoziiert ist, dass ein Kettenpaar (PA_i) gebildet wird, wobei zwischen den Ketten jedes Kettenpaares eine Verbindungsschaltung (300) eingerichtet ist, wobei die Vorrichtung ferner mindestens ein Steuermodul (MOD_CO) umfasst, das dazu konfiguriert ist, Mittel zum Umschalten (400) der Vorrichtung anzusteuern und analoge (MOD_EST_1) und digitale (MOD_EST_2) Interferenzunterdrückungsmittel der Vorrichtung sowie alle oder einen Teil der Sende- und Empfangsketten zu aktivieren/zu deaktivieren, sodass die Vorrichtung dazu fähig ist, zwischen mindestens zwei unterschiedlichen Modi zu wechseln:
- einem ersten Modus, in dem die Unterdrückungsmittel sowie die Sende- und Empfangsketten aktiviert sind, wobei die Phasenschieber über ihren zweiten Port mit ihren jeweiligen Ketten verbunden sind,
- einem zweiten Modus, in dem die Ketten, mit Ausnahme ihrer jeweiligen Verstärker, deaktiviert sind, wobei der zweite Port eines Phasenschiebers, der in eine Kette eines Kettenpaares integriert ist, über die mit dem Paar assoziierte Verbindungsschaltung mit dem zweiten Port des Phasenschiebers, der in die andere Kette des Paares integriert ist, verbunden ist.

2. Vorrichtung (DC_2) nach Anspruch 1, wobei die Umschaltungsmittel für jeden passiven Phasenschieber (DP_TX_i, DP_RX_i) einen Inverter (410, 420) umfassen, der gemäß zwei Konfigurationen konfigurierbar ist:
- einer ersten Konfiguration, in der der Inverter den zweiten Port (PO_2) des Phasenschiebers mit der Kette (C_TX_i, C_RX_i), in die der Phasenschieber integriert ist, verbindet,
- einer zweiten Konfiguration, in der der Inverter den zweiten Port des Phasenschiebers mit der Verbindungsschaltung (300) verbindet, die mit dem Kettenpaar (PA_i) assoziiert ist, das die Kette, in die der Phasenschieber integriert ist, beinhaltet.

3. Vorrichtung (DC_2) nach Anspruch 1, wobei die Umschaltungsmittel für jeden passiven Phasenschieber (DP_TX_i, DP_RX_i) einen ersten Inverter (411, 421) und einen zweiten Inverter (412, 422) umfassen, die an jeweilige Übertragungsleitungen (L_1, L_2) angeschlossen sind, die parallel geschaltet sind und sich an einem Verbindungspunkt (P_C), mit dem der zweite Port (PO_2) des Phasenschiebers verbunden ist, treffen, wobei jeder Inverter gemäß zwei Konfigurationen konfigurierbar ist, einer ersten Konfiguration, in der:
- der erste Inverter den Verbindungspunkt mit der Kette (C_TX_i, C_RX_i), in die der Phasenschieber integriert ist, verbindet,
- der zweite Inverter den Verbindungspunkt mit einer ersten Impedanzanpassungsschaltung (CIR_Z_1) verbindet, sowie einer zweiten Konfiguration, in der:
- der erste Inverter den Verbindungspunkt mit einer zweiten Impedanzanpassungsschaltung (CIR_Z_2) verbindet, die sich von der ersten Impedanzanpassungsschaltung unterscheidet,
- der zweite Inverter den Verbindungspunkt mit der Verbindungsschaltung (300) verbindet, die mit dem Kettenpaar (PA_i) assoziiert ist, das die Kette, in die der Phasenschieber integriert ist, beinhaltet,
wobei die erste/zweite Impedanzschaltung konfiguriert ist, um an dem Verbindungspunkt eine offene Schaltung herzustellen, wenn der zweite Inverter/erste Inverter in seiner ersten Konfiguration/zweiten Konfiguration konfiguriert ist.

4. Vorrichtung (DC_2) nach einem beliebigen der Ansprüche 1 bis 3, wobei das mindestens eine Steuermodul dazu konfiguriert ist, den Wechsel zwischen den mindestens zwei unterschiedlichen Modi gemäß einem bestimmten Zeitschema zu implementieren.

5. Vorrichtung (DC_2) nach einem beliebigen der Ansprüche 1 bis 3, wobei das mindestens eine Steuermodul dazu konfiguriert ist, den Wechsel zwischen den mindestens zwei unterschiedlichen Modi gemäß einem dynamischen Zeitschema zu implementieren.

6. Vorrichtung (DC_2) nach einem beliebigen der Ansprüche 1 bis 5, wobei der Leistungsverstärker (103) und der rauscharme Verstärker (104), die zu jedem Kettenpaar (PA_i) gehören, so konfiguriert sind, dass das Produkt ihrer jeweiligen Verstärkungen kleiner als oder gleich 1 ist, wenn die Vorrichtung gemäß dem zweiten Modus konfiguriert ist.

7. Vorrichtung (DC_2) nach einem beliebigen der Ansprüche 1 bis 6, wobei die analogen Unterdrückungsmittel in dem zweiten Modus aktiviert sind.

8. Vorrichtung (DC_2) nach einem beliebigen der Ansprüche 1 bis 7, wobei das mindestens eine Steuermodul (MOD_CO) dazu konfiguriert ist, die Umschaltungsmittel (400) so anzusteuern und die analogen (MOD_EST_1) und digitalen (MOD_EST_2) Interferenzunterdrückungsmittel sowie alle oder einen Teil der Sende- und Empfangsketten so zu aktivieren/zu deaktivieren, dass die Vorrichtung dazu fähig ist, zwischen dem ersten Modus, dem zweiten Modus und mindestens einem Modus von Folgenden zu wechseln:
- einem dritten Modus, in dem die Sendeketten (C_TX_i)/Empfangsketten (C_RX_i) aktiviert/deaktiviert sind, wobei die Phasenschieber (DP_TX_i) des ersten Satzes über ihren zweiten Port (PO_2) mit ihren jeweiligen Sendeketten verbunden sind,
- einem vierten Modus, in dem die Sende-/ Empfangsketten deaktiviert/aktiviert sind, wobei die Phasenschieber (DP_RX_i) des zweiten Satzes über ihren zweiten Port mit ihren jeweiligen Empfangsketten verbunden sind.

9. System (10) zur Drahtloskommunikation, das Folgendes umfasst:
- eine erste Drahtloskommunikationsvorrichtung (DC_1), die dazu konfiguriert ist, mindestens einen Übertragungsstrahl zu senden,
- eine zweite Drahtloskommunikationsvorrichtung (DC_2) nach einem beliebigen der Ansprüche 1 bis 8, die dazu fähig ist, mindestens einen der Übertragungsstrahlen in eine bestimmte Richtung zu reflektieren, wenn sie gemäß dem zweiten Modus konfiguriert ist,
- eine dritte Drahtloskommunikationsvorrichtung (DC_3), die dazu konfiguriert ist, den mindestens einen durch die zweite Kommunikationsvorrichtung reflektierten Übertragungsstrahl zu empfangen.

10. Verfahren zur Steuerung des Betriebs einer Drahtloskommunikationsvorrichtung (DC_2) nach einem beliebigen der Ansprüche 1 bis 8, wobei das Steuerverfahren durch das mindestens eine Steuermodul (MOD_CO) der Drahtloskommunikationsvorrichtung implementiert wird und wobei die Umschaltungsmittel (400) so angesteuert und die analogen (MOD_EST_1) und digitalen (MOD_EST_2) Interferenzunterdrückungsmittel der Vorrichtung sowie alle oder ein Teil der Sende- und Empfangsketten so aktiviert oder deaktiviert (E20) werden, dass die Drahtloskommunikationsvorrichtung zwischen den mindestens zwei unterschiedlichen Modi wechselt.

11. Computerprogramm, das Anweisungen für die Implementierung eines Steuerverfahrens nach Anspruch 10 umfasst, wenn das Programm durch mindestens einen Computer ausgeführt wird, der eine Vorrichtung nach einem beliebigen der Ansprüche 1-8 steuert.

12. Computerlesbares Speichermedium, auf dem ein Computerprogramm nach Anspruch 11 gespeichert ist.

13. Kommunikationsverfahren, das durch ein System (10) zur Drahtloskommunikation nach Anspruch 9 implementiert wird, wobei mindestens ein Übertragungsstrahl, der durch die erste Kommunikationsvorrichtung (DC_1) gesendet wird, durch die zweite Kommunikationsvorrichtung (DC_2) reflektiert wird, wenn sich die zweite Kommunikationsvorrichtung in dem zweiten Modus befindet, und durch die dritte Kommunikationsvorrichtung (DC_3) empfangen wird.

14. Verfahren nach Anspruch 13, wobei die zweite Drahtloskommunikationsvorrichtung passive Phasenschieber (DP_TX_i, DP_RX_i) umfasst, die gemäß einem ersten Satz (E_1) und einem zweiten Satz (E_2) verteilt sind, wobei die Phasenschieber des ersten Satzes/zweiten Satzes mit jeweiligen Sendeketten (C_TX_i)/Empfangsketten (C_RX_i) verbunden sind, wobei das Verfahren die folgenden Schritte umfasst:
- Schätzen (F10) eines ersten Ausbreitungskanals (CA_1) zwischen der ersten und der zweiten Kommunikationsvorrichtung (DC_1, DC_2),
- Bestimmen (F20), durch die zweite Kommunikationsvorrichtung und in Abhängigkeit von der Schätzung des ersten Ausbreitungskanals, eines ersten Phasengesetzes (LP_1), das dazu fähig ist, die passiven Phasenschieber des zweiten Satzes so zu konfigurieren, dass der Empfang des mindestens einen Übertragungsstrahls, der von der ersten Kommunikationsvorrichtung kommt, bevorzugt wird,
- Schätzen (F30) eines zweiten Ausbreitungskanals (CA_2) zwischen der zweiten und der dritten Kommunikationsvorrichtung (DC_2, DC_3),
- Bestimmen (F40), durch die zweite Kommunikationsvorrichtung und in Abhängigkeit von der Schätzung des zweiten Ausbreitungskanals, eines zweiten Phasengesetzes (LP_2), das dazu fähig ist, die passiven Phasenschieber des ersten Satzes so zu konfigurieren, dass ein Senden eines Übertragungsstrahls in Richtung der dritten Kommunikationsvorrichtung bevorzugt wird,
- Reflektieren (F50), durch die zweite Kommunikationsvorrichtung, die in dem zweiten Modus konfiguriert ist, des mindestens einen Übertragungsstrahls zu der dritten Kommunikationsvorrichtung, wobei das erste und das zweite Phasengesetz durch die Phasenschieber des zweiten Satzes bzw. die Phasenschieber des ersten Satzes simultan angewendet werden.

## Claims

1. Wireless communication device (DC_2) having an architecture configured to transmit and receive transmission beams in full-duplex mode via a network of elementary antennas (A_i) and comprising passive phase shifters (DP_TX_i, DP_RX_i) distributed according to a first set and a second set, said phase shifters each comprising a first port (PO_1) and a second port (PO_2), the phase shifters of the first set/second set being respectively connected, via their first ports, to power (103)/low noise (104) amplifiers of transmit (C_TX_i)/receive (C_RX_i) chains connected to said elementary antennas, each transmit/receive chain being associated with a receive/transmit chain so as to form a pair (PA_i) of chains, a trunk (300) being arranged between the chains of each pair of chains, said device moreover comprising at least one control module (MOD_CO) configured to control switching means (400) of said device and to activate/deactivate analogue (MOD_EST_1) and digital (MOD_EST_2) interference cancellation means of said device and all or some of the transmit and receive chains, so that the device is capable of alternating between at least two distinct modes:
- a first mode, in which the cancellation means and the transmit and receive chains are activated, the phase shifters being connected to their respective chains via their second port,
- a second mode, in which the chains, apart from their respective amplifiers, are deactivated, the second port of a phase shifter integrated in one chain of a pair of chains being connected, via the trunk associated with said pair, to the second port of the phase shifter integrated in the other chain of said pair.

2. Device (DC_2) according to Claim 1, wherein the switching means comprise, for each passive phase shifter (DP_TX_i, DP_RX_i), an inverter (410, 420) configurable according to two configurations:
- a first configuration, in which said inverter connects the second port (PO_2) of said phase shifter to the chain (C_TX_i, C_RX_i) in which said phase shifter is integrated,
- a second configuration, in which said inverter connects the second port of said phase shifter to the trunk (300) associated with the pair (PA_i) of chains comprising the chain in which said phase shifter is integrated.

3. Device (DC_2) according to Claim 1, wherein the switching means comprise, for each passive phase shifter (DP_TX_i, DP_RX_i), a first inverter (411, 421) and a second inverter (412, 422), which are connected to respective transmission lines (L_1, L_2) that are connected in parallel and meet at a connection point (P_C) to which the second port (PO_2) of said phase shifter is connected, each inverter being configurable according to two configurations, a first configuration, in which:
- the first inverter connects said connection point to the chain (C_TX_i, C_RX_i) in which said phase shifter is integrated,
- the second inverter connects said connection point to a first impedance matching circuit (CIR_Z_1),
and a second configuration, in which:
- the first inverter connects said connection point to a second impedance matching circuit (CIR_Z_2) distinct from said first impedance matching circuit,
- the second inverter connects said connection point to the trunk (300) associated with the pair (PA_i) of chains comprising the chain in which said phase shifter is integrated,
said first/second impedance circuit being configured to create a circuit that is open at the connection point when the second inverter/first inverter is configured in its first configuration/second configuration.

4. Device (DC_2) according to any one of Claims 1 to 3, wherein said at least one control module is configured to implement the alternation between said at least two distinct modes according to a determined timing scheme.

5. Device (DC_2) according to any one of Claims 1 to 3, wherein said at least one control module is configured to implement the alternation between said at least two distinct modes according to a dynamic timing scheme.

6. Device (DC_2) according to any one of Claims 1 to 5, wherein the power amplifier (103) and the low noise amplifier (104) belonging to each pair (PA_i) of chains are configured so that the product of their respective gains is less than or equal to 1 when the device is configured according to the second mode.

7. Device (DC_2) according to any one of Claims 1 to 6, wherein the analogue cancellation means are activated in the second mode.

8. Device (DC_2) according to any one of Claims 1 to 7, wherein said at least one control module (MOD_CO) is configured to control the switching means (400) and to activate/deactivate the analogue (MOD_EST_1) and digital (MOD_EST_2) interference cancellation means and all or some of the transmit and receive chains, so that the device is capable of alternating between the first mode, the second mode and at least one mode from among:
- a third mode, in which the transmit (C_TX_i)/receive (C_RX_i) chains are activated/deactivated, the phase shifters (DP_TX_i) of the first set being connected to their respective transmit chains via their second port (PO_2),
- a fourth mode, in which the transmit/receive chains are deactivated/activated, the phase shifters (DP_RX_i) of the second set being connected to their respective receive chains via their second port.

9. Wireless communication system (10) comprising:
- a first wireless communication device (DC_1) configured to transmit at least one transmission beam,
- a second wireless communication device (DC_2) according to any one of Claims 1 to 8, capable of reflecting at least one of said transmission beams in a determined direction when it is configured according to said second mode,
- a third wireless communication device (DC_3), configured to receive said at least one transmission beam reflected by said second communication device.

10. Method for controlling the operation of a wireless communication device (DC_2) according to any one of Claims 1 to 8, said control method being implemented by said at least one control module (MOD_CO) of said wireless communication device, and wherein the switching means (400) are controlled and the analogue (MOD_EST_1) and digital (MOD_EST_2) interference cancellation means of said device and all or some of the transmit and receive chains are activated or deactivated (E20) so that said wireless communication device alternates between said at least two distinct modes.

11. Computer program comprising instructions for implementing a control method according to Claim 10 when said program is executed by at least one computer controlling a device according to any one of Claims 1-8.

12. Computer-readable recording medium on which a computer program according to Claim 11 is recorded.

13. Communication method implemented by a wireless communication system (10) according to Claim 9, wherein at least one transmission beam transmitted by the first communication device (DC_1) is reflected by the second communication device (DC_2) when said second communication device is in said second mode and received by the third communication device (DC_3).

14. Method according to Claim 13, wherein the second wireless communication device comprises passive phase shifters (DP_TX_i, DP_RX_i) distributed according to a first set (E_1) and a second set (E_2), the phase shifters of the first set/second set being connected to respective transmit (C_TX_i)/receive (C_RX_i) chains, said method comprising steps of:
- estimating (F10) a first propagation channel (CA_1) between the first and second communication devices (DC_1, DC_2),
- determining (F20), by way of the second communication device and on the basis of the estimation of the first propagation channel, a first phase law (LP_1) capable of configuring the passive phase shifters of said second set so as to promote the reception of said at least one transmission beam from the first communication device,
- estimating (F30) a second propagation channel (CA_2) between the second and third communication devices (DC_2, DC_3),
- determining (F40), by way of the second communication device and on the basis of the estimation of the second propagation channel, a second phase law (LP_2) capable of configuring the passive phase shifters of said first set so as to promote a transmission beam transmission in the direction of said third communication device,
- reflecting (F50), by way of the second communication device configured in said second mode, said at least one transmission beam towards the third communication device, said first and second phase laws being applied simultaneously by the phase shifters of the second set and the phase shifters of the first set, respectively.
